# EUROPEAN PATENT APPLICATION

(11) **EP 4 847 172 A1**
(43) Date of publication of application: **02.12.2026**
(21) Application number: 24926848.3
(22) Date of filing: 26.11.2024
(51) Int. Cl.: B23B 19/02, B23Q 1/70

(54) **ULTRASONIC MACHINING APPARATUS PROVIDED WITH UPPER AND LOWER RINGS, ULTRASONIC MAIN SHAFT, ULTRASONIC MACHINE TOOL, AND ULTRASONIC DRILL**

(30) Priority: 01.03.2024 CN 202410235461
(71) Applicant: Conprofe Machine Tools Co., Ltd., Guangzhou, Guangdong 510663 (CN); Conprofe Technology Group Co., Ltd., Guangzhou, Guangdong 510663 (CN); Aenoasa Precision Tools Co., Ltd., Guangzhou, Guangdong 510663 (CN); Smartguy Intelligent Equipment Co., Ltd., Guangzhou, Guangdong 510663 (CN); Smartguy Intelligent Equipment Co., Ltd. Guangzhou Branch, Guangzhou, Guangdong 510663 (CN)
(72) Inventor: YAN, Bingjiang, Guangzhou, Guangdong 510663 (CN); LI, Weiqiu, Guangzhou, Guangdong 510663 (CN)
(74) Representative: Metida
(86) International application number: PCT/CN2024/134672
(87) International publication number: WO 2025/179990

(57) **Abstract**

The present disclosure relates to the technical field of ultrasonic machining, and in particular to an axial-opposed-ring ultrasonic machining device, an ultrasonic spindle, an ultrasonic machine tool, and an ultrasonic drill. The axial-opposed-ring ultrasonic machining device includes a tool body, a wireless transmission mechanism, and an ultrasonic transducer, where the wireless transmission mechanism includes a transmitting unit and a receiving unit. When the structural parameters of the transmitting unit and the receiving unit, together with an applied peak current and an apparent power, satisfy predetermined equations, the apparent power and the applied peak current are matched with the structural parameters and performance of the transmitting unit and the receiving unit during operation. This reduces the temperature rise of the transmitting unit and the receiving unit during operation, improves the wireless transmission efficiency and the continuous operation stability of the device, and improves the energy conversion efficiency.

## Description

### TECHNICAL FIELD

The present disclosure relates to the technical field of ultrasonic machining, and in particular to an axial-opposed-ring ultrasonic machining device, an ultrasonic spindle, an ultrasonic machine tool, and an ultrasonic drill.

### BACKGROUND

Advanced materials represented by functional ceramics, optical crystals, high-strength and high-toughness alloys, and ceramic matrix composites exhibit excellent mechanical, physical, and chemical properties. Nevertheless, such materials are typical difficult-to-machine materials. In the cutting process, bottleneck problems including rapid wear of cutting tools, a short service life, poor machining quality, and low machining efficiency exist, which can hardly be thoroughly addressed with conventional mechanical machining processes.

Ultrasonic machining refers to a machining process that applies micrometer-scale ultrasonic vibrations to a machining tool or a workpiece, and controls vibration frequency, vibration amplitude, and vibration direction to achieve periodic high-frequency separation between the tool and the workpiece. Numerous research studies and practical applications have verified that in machining of new materials including difficult-to-machine metals, hard and brittle materials, and composite materials, ultrasonic machining technology delivers prominent advantages over conventional machining in restraining microcrack initiation, lowering cutting forces, prolonging tool life, removing workpiece burrs, and improving the machining efficiency.

As a specific application of ultrasonic machining technology, ultrasonic machining devices can be regarded as a conventional tool fitted with an ultrasonic transducer, which is configured to make the tool generate high-frequency vibration in the machining process, so as to improve the machining efficiency.

The existing ultrasonic machining devices each are provided with an ultrasonic wireless transmission mechanism including a wireless transmitting unit and a wireless receiving unit. The wireless transmitting unit and the wireless receiving unit are arranged opposite each other along the axial direction of the machining tool. When power is supplied to the wireless transmitting unit, the wireless transmitting unit and the wireless receiving unit are magnetically coupled to each other, and the magnetic flux lines circulate along the axial direction of the machining tool. As a result, the wireless receiving unit supplies power to the ultrasonic transducer.

However, the existing ultrasonic machining devices fail to correlate the structural parameters of the ultrasonic wireless transmission mechanism with its peak current and apparent power under the operating mode. Accordingly, during operation, the apparent power and peak current can easily fail to match the structural parameters of the ultrasonic wireless transmission mechanism. This causes excessive temperature rise of the ultrasonic wireless transmission mechanism as the time elapses and further impairs the operation stability, transmission efficiency, and service life of the ultrasonic wireless transmission mechanism.

### SUMMARY

An objective of the present disclosure is to provide an axial-opposed-ring ultrasonic machining device, an ultrasonic spindle, an ultrasonic machine tool, and an ultrasonic drill that can improve the operation stability and transmission efficiency, reduce the temperature rise, and extend the service life.

To achieve the above objective, the present disclosure provides an axial-opposed-ring ultrasonic machining device, including:
a tool body, where the tool body includes a rear end configured to be connected to a rotary output device and a front end provided with a mounting cavity;
a wireless transmission mechanism, where the wireless transmission mechanism includes a transmitting unit and a receiving unit; the transmitting unit is disposed on an outer peripheral side of the tool body, and the receiving unit is disposed on the outer peripheral side of the tool body; the transmitting unit and the receiving unit are arranged opposite each other along an axial direction of the tool body and form an air gap; the transmitting unit includes a transmitting coil and a transmitting magnet configured to generate a magnetic field based on a current in the transmitting coil; and the receiving unit includes a receiving coil and a receiving magnet configured to receive the magnetic field generated by the transmitting unit; and
an ultrasonic transducer, where the ultrasonic transducer is disposed in the mounting cavity and electrically connected to the receiving unit;
where, a frequency of an electrical signal input to the receiving unit is f Hz, an air-gap reluctance of the wireless transmission mechanism is R_{δ} H⁻¹, a reluctance of the transmitting unit is Rₜᵣₐ H⁻¹, and a reluctance of the receiving unit is R_{rec} H⁻¹;
an apparent power of the transmitting unit is Qₜᵣₐ VA, a peak current applied to the transmitting unit is Iₜᵣₐ A, and a number of turns of the transmitting coil is Nₜᵣₐ; and a following equation holds: ${Q}_{tra} = \left[\frac{2 \times f \times {N}_{tra}^{2} \times {I}_{tra}^{2}}{{R}_{δ} + {R}_{rec} + {R}_{tra}}\right] \times {K}_{1}$
a number of turns of the receiving coil is N_{rec}, an apparent power of the receiving unit is Q_{rec} VA, and a peak current applied to the receiving unit is I_{rec} A; and a following equation holds: ${Q}_{rec} = \left[\frac{2 \times f \times {N}_{rec}^{2} \times {I}_{rec}^{2}}{{R}_{δ} + {R}_{rec} + {R}_{tra}}\right] \times {K}_{1}$
where, K₁ is a correction coefficient, 0.5≤K₁≤1.5, 2≤N_{rec}≤240, and 2≤Nₜᵣₐ≤240.

In some embodiments of the present disclosure, the transmitting unit extends around the outer peripheral side of the tool body by an angle of θ, $\frac{π}{4} \leq θ \leq 2 π$.

In some embodiments of the present disclosure, θ=2π; the transmitting magnet includes a first annular base plate, a first annular inner side plate, and a first annular outer side plate; the first annular inner side plate is connected to an inner side of the first annular base plate, and the first annular outer side plate is connected to an outer side of the first annular base plate; the first annular base plate, the first annular inner side plate, and the first annular outer side plate form a first coil embedding groove with an opening facing the receiving unit; the transmitting coil is disposed around the first annular inner side plate along a circumferential direction of the tool body, and is accommodated in the first coil embedding groove; and a thickness of the first annular base plate is H₃ mm, a thickness of the first annular inner side plate is b₃ mm, a thickness of the first annular outer side plate is b₄ mm, the transmitting magnet has a length of H₄ mm in the axial direction of the tool body, an inner diameter of the first annular inner side plate is D₃ mm, and an outer diameter of the first annular outer side plate is D₄ mm;
the receiving magnet includes a second annular base plate, a second annular inner side plate, and a second annular outer side plate; the second annular inner side plate is connected to an inner side of the second annular base plate, and the second annular outer side plate is connected to an outer side of the second annular base plate; the second annular base plate, the second annular inner side plate, and the second annular outer side plate form a second coil embedding groove with an opening facing the transmitting unit; the receiving coil is disposed around the second annular inner side plate along the circumferential direction of the tool body, and is accommodated in the second coil embedding groove; and a thickness of the second annular base plate is H₁ mm, a thickness of the second annular inner side plate is b₁ mm, a thickness of the second annular outer side plate is b₂ mm, the receiving magnet has a length of H₂ mm in the axial direction of the tool body, an inner diameter of the second annular inner side plate is D₁ mm, and an outer diameter of the second annular outer side plate is D₂ mm;
a relative permeability of each of the transmitting magnet and the receiving magnet is u, with a vacuum permeability being u₀ H/m, a magnetic-circuit area of the second annular inner side plate is S₁, and a magnetic-circuit area of the second annular outer side plate is S₂; and S₁ and S₂ are respectively expressed as follows: ${S}_{1} = π \left[{\left(\frac{{D}_{1}}{2}+{b}_{1}\right)}^{2}-{\left(\frac{{D}_{1}}{2}\right)}^{2}\right]$ ${S}_{2} = π \left[{\left(\frac{{D}_{2}}{2}\right)}^{2}-{\left(\frac{{D}_{2}}{2}-{b}_{2}\right)}^{2}\right]$
a reluctance of the second annular inner side plate is R₁, a reluctance of the second annular outer side plate is R₂, and a reluctance of the second annular base plate is R₃; and the reluctance R_{rec} of the receiving unit is expressed by the above parameters: ${R}_{1} = \frac{{H}_{2} - {H}_{1}}{{S}_{1} \times u \times {u}_{0}} \times 1000$ ${R}_{2} = \frac{{H}_{2} - {H}_{1}}{{S}_{2} \times u \times {u}_{0}} \times 1000$ ${R}_{3} = \frac{ln \left(\frac{{D}_{2}}{{D}_{1}}\right)}{π \times 2 {H}_{1} \times u \times {u}_{0}} \times 1000$ ${R}_{rec} = {R}_{1} + {R}_{2} + {R}_{3}$
a magnetic-circuit area of the first annular inner side plate is S₃, and a magnetic-circuit area of the first annular outer side plate is S₄; and S₃ and S₄ are respectively expressed as follows: ${S}_{3} = π \left[{\left(\frac{{D}_{3}}{2}+{b}_{3}\right)}^{2}-{\left(\frac{{D}_{3}}{2}\right)}^{2}\right]$ ${S}_{4} = π \left[{\left(\frac{{D}_{4}}{2}\right)}^{2}-{\left(\frac{{D}_{4}}{2}-{b}_{4}\right)}^{2}\right]$
a reluctance of the first annular inner side plate is R₄, a reluctance of the first annular outer side plate is R₅, and a reluctance of the first annular base plate is R₆; and the reluctance Rₜᵣₐ of the transmitting unit is expressed by the above parameters: ${R}_{4} = \frac{{H}_{4} - {H}_{3}}{{S}_{3} \times u \times {u}_{0}} \times 1000$ ${R}_{5} = \frac{{H}_{4} - {H}_{3}}{{S}_{4} \times u \times {u}_{0}} \times 1000$ ${R}_{6} = \frac{ln \left(\frac{{D}_{4}}{{D}_{3}}\right)}{π \times 2 {H}_{3} \times u \times {u}_{0}} \times 1000$ ${R}_{tra} = {R}_{4} + {R}_{5} + {R}_{6} .$

In some embodiments of the present disclosure, an equivalent air-gap magnetic-circuit area between the second annular inner side plate and the first annular inner side plate is S_{δ1}, an equivalent air-gap magnetic-circuit area between the second annular outer side plate and the first annular outer side plate is S_{δ2}, a vacuum permeability is u₀ H/m, an air-gap reluctance between the second annular inner side plate and the first annular inner side plate is R_{δ1}, an air-gap reluctance between the second annular outer side plate and the first annular outer side plate is R_{δ2}, F₁, F₂, F₃, and F₄ are fringing flux coefficients, and an air-gap width is δ mm;
in response to that b₁=b₃, then: ${S}_{δ 1} = π \left[{\left(\frac{{D}_{3}}{2}+{b}_{3}\right)}^{2}-{\left(\frac{{D}_{3}}{2}\right)}^{2}\right]$ ${F}_{1} = 1 + \frac{δ}{\sqrt{{10}^{- 3} \times {S}_{δ 1}}} \times ln \left[\frac{{10}^{5} \times 2 \times \left({H}_{2}-{H}_{1}+{H}_{4}-{H}_{3}+δ\right)}{δ}\right]$ ${R}_{δ 1} = \frac{16}{{F}_{1}} \times δ \times \left(\frac{1}{{u}_{0} \times {S}_{δ 1}}\right) \times 1000$
in response to that b₂=b₄, then: ${S}_{δ 2} = π \left[{\left(\frac{{D}_{4}}{2}\right)}^{2}-{\left(\frac{{D}_{4} - 2 {b}_{4}}{2}\right)}^{2}\right]$ ${F}_{2} = 1 + \frac{δ}{\sqrt{{10}^{- 3} \times {S}_{δ 2}}} \times ln \left[\frac{{10}^{5} \times 2 \times \left({H}_{2}-{H}_{1}+{H}_{4}-{H}_{3}+δ\right)}{δ}\right]$ ${R}_{δ 2} = \frac{16}{{F}_{2}} \times δ \times \left(\frac{1}{{u}_{0} \times {S}_{δ 2}}\right) \times 1000$
in response to that b₁>b₃, then w₁=b₁, w₂=b₃, and D=D₃; in response to that b₃>b₁, then w₁=b₃, w₂=b₁, and D=D₁; and thus: ${F}_{3} = 1 + \frac{δ}{\sqrt{{10}^{- 3} \times π \left[{\left(\frac{D}{2}+{w}_{2}\right)}^{2}-{\left(\frac{D}{2}\right)}^{2}\right]}} \times ln \left[\frac{{10}^{5} \times 2 \times \left({H}_{2}-{H}_{1}+{H}_{4}-{H}_{3}+δ\right)}{δ}\right]$ ${R}_{δ 1} = \frac{16}{{F}_{3}} \times \frac{1}{{u}_{0} \times π} \times \frac{1}{2 \times \frac{\left(\frac{{w}_{1} - {w}_{2}}{2}\right)}{δ} \times \left(\frac{D + {w}_{2}}{1000}\right)} \times ln \left[\frac{{\left(\frac{D}{2}+{w}_{2}\right)}^{2} - {\left(\frac{D}{2}\right)}^{2} + 2 \times \frac{\left(\frac{{w}_{1} - {w}_{2}}{2}\right)}{δ} \times \left(D+{w}_{2}\right) \times δ}{{\left(\frac{D}{2}+{w}_{2}\right)}^{2} - {\left(\frac{D}{2}\right)}^{2}}\right]$
in response to that b₂>b₄, then w₁=b₂, w₂=b₄, and D=D₄; in response to that b₄>b₂, then w₁=b₄, w₂=b₂, and D=D₂; and thus: ${F}_{4} = 1 + \frac{δ}{\sqrt{{10}^{- 3} \times π \left[{\left(\frac{D}{2}\right)}^{2}-{\left(\frac{D}{2}-{w}_{2}\right)}^{2}\right]}} \times ln \left[\frac{{10}^{5} \times 2 \times \left({H}_{2}-{H}_{1}+{H}_{4}-{H}_{3}+δ\right)}{δ}\right]$ ${R}_{δ 2} = \frac{16}{{F}_{4}} \times \frac{1}{{u}_{0} \times π} \times \frac{1}{2 \times \frac{\left(\frac{{w}_{1} - {w}_{2}}{2}\right)}{δ} \times \left(\frac{D - {w}_{2}}{1000}\right)} \times ln \left[\frac{{\left(\frac{D}{2}\right)}^{2} - {\left(\frac{D}{2}-{w}_{2}\right)}^{2} + 2 \times \frac{\left(\frac{{w}_{1} - {w}_{2}}{2}\right)}{δ} \times \left(D-{w}_{2}\right) \times δ}{{\left(\frac{D}{2}\right)}^{2} - {\left(\frac{D}{2}-{w}_{2}\right)}^{2}}\right]$ ${R}_{δ} = {K}_{2} \times \left({R}_{δ 1}+{R}_{δ 2}\right)$
where, K₂ is a reluctance correction coefficient, 0.2≤K₂≤3.

In some embodiments of the present disclosure, $\frac{π}{4} \leq θ < 2 π$; the transmitting magnet includes an arc-shaped base plate, an arc-shaped inner side plate, and an arc-shaped outer side plate; the arc-shaped inner side plate is connected to an inner side of the arc-shaped base plate, and the arc-shaped outer side plate is connected to an outer side of the arc-shaped base plate; the arc-shaped base plate, the arc-shaped inner side plate, and the arc-shaped outer side plate are concentrically arranged; the arc-shaped base plate, the arc-shaped inner side plate, and the arc-shaped outer side plate form a first coil embedding groove with an opening facing the receiving unit; a thickness of the arc-shaped base plate is H₃ mm, a thickness of the arc-shaped inner side plate is b₃ mm, a thickness of the arc-shaped outer side plate is b₄ mm, the transmitting magnet has a length of H₄ mm in the axial direction of the tool body, an inner diameter of the arc-shaped inner side plate is D₃ mm, and an outer diameter of the arc-shaped outer side plate is D₄ mm; and the transmitting coil is disposed around the arc-shaped base plate or the arc-shaped outer side plate along a circumferential direction of the tool body;
the receiving magnet includes a second annular base plate, a second annular inner side plate, and a second annular outer side plate; the second annular inner side plate is connected to an inner side of the second annular base plate, and the second annular outer side plate is connected to an outer side of the second annular base plate; the second annular base plate, the second annular inner side plate, and the second annular outer side plate form a second coil embedding groove with an opening facing the transmitting unit; a thickness of the second annular base plate is H₁ mm, a thickness of the second annular inner side plate is b₁ mm, a thickness of the second annular outer side plate is b₂ mm, the receiving magnet has a length of H₂ mm in the axial direction of the tool body, an inner diameter of the second annular inner side plate is D₁ mm, and an outer diameter of the second annular outer side plate is D₂ mm; and the receiving coil is disposed around the second annular inner side plate along the circumferential direction of the tool body;
a relative permeability of each of the transmitting magnet and the receiving magnet is u, with a vacuum permeability being u₀ H/m, a magnetic-circuit area of the second annular inner side plate is S₁, and a magnetic-circuit area of the second annular outer side plate is S₂; and S₁ and S₂ are respectively expressed as follows: ${S}_{1} = \frac{θ}{2} \left[{\left(\frac{{D}_{1}}{2}+{b}_{1}\right)}^{2}-{\left(\frac{{D}_{1}}{2}\right)}^{2}\right]$ ${S}_{2} = \frac{θ}{2} \left[{\left(\frac{{D}_{2}}{2}\right)}^{2}-{\left(\frac{{D}_{2}}{2}-{b}_{2}\right)}^{2}\right]$
a reluctance of the second annular inner side plate is R₁, a reluctance of the second annular outer side plate is R₂, and a reluctance of the second annular base plate is R₃; and the reluctance R_{rec} of the receiving unit is expressed by the above parameters: ${R}_{1} = \frac{{H}_{2} - {H}_{1}}{{S}_{1} \times u \times {u}_{0}} \times 1000$ ${R}_{2} = \frac{{H}_{2} - {H}_{1}}{{S}_{2} \times u \times {u}_{0}} \times 1000$ ${R}_{3} = \frac{ln \left(\frac{{D}_{2}}{{D}_{1}}\right)}{\frac{θ}{2} \times 2 {H}_{1} \times u \times {u}_{0}} \times 1000$ ${R}_{rec} = {R}_{1} + {R}_{2} + {R}_{3}$
a magnetic-circuit area of the arc-shaped inner side plate is S₃, and a magnetic-circuit area of the arc-shaped outer side plate is S₄; and S₃ and S₄ are respectively expressed as follows: ${S}_{3} = \frac{θ}{2} \left[{\left(\frac{{D}_{3}}{2}+{b}_{3}\right)}^{2}-{\left(\frac{{D}_{3}}{2}\right)}^{2}\right]$ ${S}_{4} = \frac{θ}{2} \left[{\left(\frac{{D}_{4}}{2}\right)}^{2}-{\left(\frac{{D}_{4}}{2}-{b}_{4}\right)}^{2}\right]$
a reluctance of the first annular inner side plate is R₄, a reluctance of the first annular outer side plate is R₅, and a reluctance of the first annular base plate is R₆; and the reluctance Rₜᵣₐ of the transmitting unit is expressed by the above parameters: ${R}_{4} = \frac{{H}_{4} - {H}_{3}}{{S}_{3} \times u \times {u}_{0}} \times 1000$ ${R}_{5} = \frac{{H}_{4} - {H}_{3}}{{S}_{4} \times u \times {u}_{0}} \times 1000$ ${R}_{6} = \frac{ln \left(\frac{{D}_{4}}{{D}_{3}}\right)}{\frac{θ}{2} \times 2 {H}_{3} \times u \times {u}_{0}} \times 1000$ ${R}_{tra} = {R}_{4} + {R}_{5} + {R}_{6} .$

In some embodiments of the present disclosure, an equivalent air-gap magnetic-circuit area between the second annular inner side plate and the arc-shaped inner side plate is S_{δ1}, an equivalent air-gap magnetic-circuit area between the second annular outer side plate and the arc-shaped outer side plate is S_{δ2}, a vacuum permeability is u₀ H/m, an air-gap reluctance between the second annular inner side plate and the arc-shaped inner side plate is R_{δ1}, an air-gap reluctance between the second annular outer side plate and the arc-shaped outer side plate is R_{δ2}, F₁, F₂, F₃, and F₄ are fringing flux coefficients, and an air-gap width is δ mm;
in response to that b₁=b₃, then: ${S}_{δ 1} = \frac{θ}{2} \left[{\left(\frac{{D}_{3}}{2}+{b}_{3}\right)}^{2}-{\left(\frac{{D}_{3}}{2}\right)}^{2}\right]$ $\begin{matrix}{F}_{1} = 1 + \frac{δ}{\sqrt{{10}^{- 3} \times {S}_{δ 1}}} \times ln \left[\frac{{10}^{5} \times 2 \times \left({H}_{2}-{H}_{1}+{H}_{4}-{H}_{3}+δ\right)}{δ}\right] \\ {R}_{δ 1} = \frac{8}{{F}_{1}} \times δ \times \left(\frac{1}{{u}_{0} \times {S}_{δ 1}}\right) \times 1000\end{matrix}$
in response to that b₂=b₄, then: ${S}_{δ 2} = \frac{θ}{2} \left[{\left(\frac{{D}_{4}}{2}\right)}^{2}-{\left(\frac{{D}_{4} - 2 {b}_{4}}{2}\right)}^{2}\right]$ ${F}_{2} = 1 + \frac{δ}{\sqrt{{10}^{- 3} \times {S}_{δ 2}}} \times ln \left[\frac{{10}^{5} \times 2 \times \left({H}_{2}-{H}_{1}+{H}_{4}-{H}_{3}+δ\right)}{δ}\right]$ ${R}_{δ 2} = \frac{8}{{F}_{2}} \times δ \times \left(\frac{1}{{u}_{0} \times {S}_{δ 2}}\right) \times 1000$
in response to that b₁>b₃, then w₁=b₁, w₂=b₃, and D=D₃; in response to that b₃>b₁, then w₁=b₃, w₂=b₁, and D=D₁; and thus: ${F}_{3} = 1 + \frac{δ}{\sqrt{{10}^{- 3} \times \frac{θ}{2} \times \left({\left(\frac{D}{2}+{w}_{2}\right)}^{2}-{\left(\frac{D}{2}\right)}^{2}\right)}} \times ln \left[\frac{{10}^{5} \times 2 \times \left({H}_{2}-{H}_{1}+{H}_{4}-{H}_{3}+δ\right)}{δ}\right]$ ${R}_{δ 1} = \frac{8}{{F}_{3}} \times \frac{1}{{u}_{0} \times \frac{θ}{2}} \times \frac{1}{2 \times \frac{\left(\frac{{w}_{1} - {w}_{2}}{2}\right)}{δ} \times \left(\frac{D + {w}_{2}}{1000}\right)} \times ln \left[\frac{{\left(\frac{D}{2}+{w}_{2}\right)}^{2} - {\left(\frac{D}{2}\right)}^{2} + 2 \times \frac{\left(\frac{{w}_{1} - {w}_{2}}{2}\right)}{δ} \times \left(D+{w}_{2}\right) \times δ}{{\left(\frac{D}{2}+{w}_{2}\right)}^{2} - {\left(\frac{D}{2}\right)}^{2}}\right]$
in response to that b₂>b₄, then w₁=b₂, w₂=b₄, and D=D₄; in response to that b₄>b₂, then w₁=b₄, w₂=b₂, and D=D₂; and thus: ${F}_{4} = 1 + \frac{δ}{\sqrt{{10}^{- 3} \times \frac{θ}{2} \times \left[{\left(\frac{D}{2}\right)}^{2}-{\left(\frac{D}{2}-{w}_{2}\right)}^{2}\right]}} \times ln \left[\frac{{10}^{5} \times 2 \times \left({H}_{2}-{H}_{1}+{H}_{4}-{H}_{3}+δ\right)}{δ}\right]$ ${R}_{δ 2} = \frac{8}{{F}_{4}} \times \frac{1}{{u}_{0} \times \frac{θ}{2}} \times \frac{1}{2 \times \frac{\left(\frac{{w}_{1} - {w}_{2}}{2}\right)}{δ} \times \left(\frac{D - {w}_{2}}{1000}\right)} \times ln \left[\frac{{\left(\frac{D}{2}\right)}^{2} - {\left(\frac{D}{2}-{w}_{2}\right)}^{2} + 2 \times \frac{\left(\frac{{w}_{1} - {w}_{2}}{2}\right)}{δ} \times \left(D-{w}_{2}\right) \times δ}{{\left(\frac{D}{2}\right)}^{2} - {\left(\frac{D}{2}-{w}_{2}\right)}^{2}}\right]$ ${R}_{δ} = {K}_{2} \times \left({R}_{δ 1}+{R}_{δ 2}\right)$
where, K₂ is a reluctance correction coefficient, 0.2≤K₂≤3.

In some embodiments of the present disclosure, the axial-opposed-ring ultrasonic machining device further includes a transmitting mount and a receiving mount, where the transmitting mount and the receiving mount are arranged opposite each other along the axial direction of the tool body; an end surface of the transmitting mount facing the receiving mount is provided with a first accommodating groove, and an end surface of the receiving mount facing the transmitting mount is provided with a second accommodating groove; the transmitting unit is accommodated in the first accommodating groove, and the receiving unit is accommodated in the second accommodating groove; an outer peripheral surface of the tool body is provided with a limiting collar protruding along a radial direction of the tool body; and the receiving mount is fixedly sleeved on the outer periphery of the tool body and abuts against a rear end surface of the limiting collar.

In some embodiments of the present disclosure, the air-gap width is δ mm, 0.1≤δ≤3.

In some embodiments of the present disclosure, the axial-opposed-ring ultrasonic machining device further includes a horn, where the ultrasonic transducer includes a piezoelectric vibrator, a screw rod, and a rear cover; the screw rod is disposed in the mounting cavity, and extends along the axial direction of the tool body; a rear end of the horn is fixedly connected to the screw rod; the piezoelectric vibrator is sleeved on the screw rod; a rear end surface of the horn protrudes outward beyond an outer peripheral surface of the screw rod along a radial direction of the screw rod; and the rear cover is threadedly connected to the screw rod, and cooperates with the rear end surface of the horn to limit the piezoelectric vibrator.

In some embodiments of the present disclosure, the axial-opposed-ring ultrasonic machining device further includes a collet configured to be sleeved on an outer periphery of a machining tool, and a nut, where a front end of the horn is provided with an insertion bore extending rearward; an inner peripheral surface of the insertion bore is tapered with a diameter gradually decreasing from front to rear; the collet is insertable together with the machining tool into the insertion bore; and the nut is configured to be threadedly connectable to the horn, and abuts against the collet to secure the machining tool.

In some embodiments of the present disclosure, the collet includes a conical section cooperating with the insertion bore; the collet is provided with a plurality of first deformation grooves arranged at intervals along a circumferential direction of the collet; and the plurality of first deformation grooves extend to or through the conical section; and
the plurality of first deformation grooves penetrate through an outer side surface and an inner side surface of the collet; the plurality of first deformation grooves extend rearward from a front end surface of the collet along an axial direction of the collet, pass through the conical section, and extend toward a rear end surface of the collet; and a first gap is provided between a rear groove surface of each of plurality of the first deformation grooves and the rear end surface of the collet.

In some embodiments of the present disclosure, the collet is provided with a plurality of second deformation grooves arranged at intervals along the circumferential direction of the collet; the plurality of second deformation grooves extend to or through the conical section; and the plurality of second deformation grooves are spaced from and staggered with the plurality of first deformation grooves; and
a second gap is provided between a front groove surface of each of the plurality of second deformation grooves and the front end surface of the collet; and the plurality of second deformation grooves extend through the rear end surface of the collet.

In some embodiments of the present disclosure, the transmitting magnet is made of any one material selected from a group consisting of ferrite, neodymium iron boron, high-frequency ceramic material, powder metallurgy material, amorphous and nanocrystalline alloys, and cobalt iron; and the receiving magnet is made of any one material selected from a group consisting of ferrite, neodymium iron boron, high-frequency ceramic material, powder metallurgy material, amorphous and nanocrystalline alloys, and cobalt iron.

The present disclosure further provides an ultrasonic spindle, including a first rotary output unit, a machining tool, and the axial-opposed-ring ultrasonic machining device, where the rear end of the tool body is assembled to the first rotary output unit; and the machining tool is assembled to the ultrasonic transducer.

The present disclosure further provides an ultrasonic machine tool, including a machine tool body and the above ultrasonic spindle, where the ultrasonic spindle is mounted on the machine tool body.

The present disclosure further provides an ultrasonic drill, including a housing, a second rotary output unit, a bearing, and the axial-opposed-ring ultrasonic machining device, where a front end surface of the housing is provided with an accommodating cavity extending rearward; the rear end of the tool body is accommodated in the accommodating cavity and connected to an output end of the second rotary output unit; and the tool body is connected to the housing via the bearing; the transmitting unit is disposed in the accommodating cavity and connected to the housing; the receiving unit is disposed in the accommodating cavity and connected to the tool body; and the machining tool is connected to the ultrasonic transducer.

Embodiments of the present disclosure have the following technical effects:

The axial-opposed-ring ultrasonic machining device provided by the present disclosure includes a tool body, a wireless transmission mechanism, and an ultrasonic transducer, where a rear end of the tool body is configured to be connected to a rotary output device; the wireless transmission mechanism includes a receiving unit connected to the tool body and a transmitting unit connected to the rotary output device or another external device; and the transmitting unit and the receiving unit are arranged opposite each other along an axial direction of the tool body and form an air gap. In this way, when the rotary output device drives the tool body to rotate, the receiving unit rotates relative to the transmitting unit. Meanwhile, electrical energy can be transmitted between the receiving unit and the transmitting unit via magnetic induction, such that the receiving unit can supply electrical energy to drive the ultrasonic transducer to generate vibration. Therefore, the machining tool connected to the axial-opposed-ring ultrasonic machining device can vibrate while rotating, thereby improving the machining performance and expanding the machining application range.

Furthermore, the structural parameters of the transmitting unit and the receiving unit are respectively reasonably designed based on the following equations: ${Q}_{tra} = \left[\frac{2 \times f \times {N}_{tra}^{2} \times {I}_{tra}^{2}}{{R}_{δ} + {R}_{rec} + {R}_{tra}}\right] \times {K}_{1}$ ${Q}_{rec} = \left[\frac{2 \times f \times {N}_{rec}^{2} \times {I}_{rec}^{2}}{{R}_{δ} + {R}_{rec} + {R}_{tra}}\right] \times {K}_{1}$

Thus, the applied peak currents and the apparent powers of the transmitting unit and the receiving unit during operation are matched with the structural parameters and performance of the transmitting unit and the receiving unit, thereby reducing the temperature rise of the wireless transmission mechanism during operation, and improving the wireless transmission efficiency and the continuous operation stability of the device. Furthermore, based on the reasonable machining requirements, the increase in the amplitude can be substantially consistent with the increase in the apparent power, which helps prevent the energy from being dissipated as heat and improves the energy conversion efficiency.

The ultrasonic spindle, the ultrasonic machine tool, and the ultrasonic drill based on the axial-opposed-ring ultrasonic machining device in the present disclosure also feature low temperature rise during operation and high continuous operation stability.

### BRIEF DESCRIPTION OF THE DRAWINGS

The present disclosure is described below in detail in combination with the drawings. The present disclosure does not depend on a special combination of the technical features. Technical features shown in the drawings and/or illustrated below are all technical features of the present disclosure and corresponding improvements of the present disclosure.

It is to be noted that the same reference numeral refers to the same or approximately the same component in different drawings.
FIG. 1 is a structural view according to Preferred Embodiment 1 of the present disclosure;
FIG. 2 is a partial front view according to the embodiment shown in FIG. 1;
FIG. 3 is a cross-sectional view taken along line I-I shown in FIG. 2;
FIG. 4 is an enlarged view of portion B shown in FIG. 3;
FIG. 5 is a cross-sectional view of a transmitting ferrite and a receiving ferrite, shown in FIG. 3, along a front-rear direction;
FIG. 6 is a partial perspective view according to the embodiment shown in FIG. 1;
FIG. 7 is a partial exploded view according to the embodiment shown in FIG. 1;
FIG. 8 is a structural view of a collet;
FIG. 9 is a structural view according to Preferred Embodiment 2 of the present disclosure;
FIG. 10 is a partial front view according to the embodiment shown in FIG. 9;
FIG. 11 is a cross-sectional view taken along line II-II shown in FIG. 10;
FIG. 12 is an enlarged view of portion C shown in FIG. 11;
FIG. 13 is a structural view of a transmitting ferrite and a receiving ferrite according to the embodiment shown in FIG. 9;
FIG. 14 is a plan view of the transmitting ferrite and the receiving ferrite according to the embodiment shown in FIG. 9;
FIG. 15 is a cross-sectional view taken along line III-III shown in FIG. 14;
FIG. 16 is a plan view of the transmitting ferrite shown in FIG. 13;
FIG. 17 is a cross-sectional view according to Preferred Embodiment 4 of the present disclosure; and
FIG. 18 is an enlarged view of portion A shown in FIG. 17.

### Reference Numerals:

100. ultrasonic spindle; 110. first rotary output unit; 111. end cover; and 112. bracket;
200. ultrasonic drill; 210. housing; 211. accommodating cavity; 220. second rotary output unit; 221. grip handle; and 230. bearing;
10. ultrasonic machining device;
20. machining tool; and
1. tool body; 11. mounting cavity; 12. limiting collar; 2. ultrasonic transducer; 21. piezoelectric vibrator; 22. screw rod; 23. rear cover; 24. horn; 241. insertion bore; 3. wireless transmission mechanism; 31. transmitting unit; 311. transmitting coil; 312. transmitting ferrite; 312a. first annular base plate; 312b. first annular inner side plate; 312c. first annular outer side plate; 312d. first coil embedding groove; 312e. arc-shaped base plate; 312f. arc-shaped inner side plate; 312g. arc-shaped outer side plate; 32. receiving unit; 321. receiving coil; 322. receiving ferrite; 322a. second annular base plate; 322b. second annular inner side plate; 322c. second annular outer side plate; 322d. second coil embedding groove; 33. transmitting mount; 331. first accommodating groove; 34. receiving mount; 341. second accommodating groove; 4. air gap; 5. collet; 51. conical section; 52. first deformation groove; 53. second deformation groove; 54. first gap; and 55. second gap; 6. nut.

### DETAILED DESCRIPTION

The specific implementations of the present disclosure are described in more detail below with reference to the drawings and embodiments. The following embodiments are intended to illustrate the present disclosure, but not to limit the scope of the present disclosure.

It is to be noted that orientations such as top, bottom, upward and downward used herein are defined based on the directions in the drawings. They are relative concepts and thus can change according to different positions and different using states. Therefore, these or other orientations should not be construed as limiting terms. It is to be noted that the term "include" does not exclude other elements or steps, and the term "a" or "an" does not exclude a plural form.

In addition, it is further to be noted that, for any single technical feature described or implied in the embodiments of the present disclosure, or any single technical feature illustrated or implied in the drawings, these technical features (or equivalents thereof) can still be combined to obtain other embodiments not directly mentioned in the present disclosure.

It should be further understood that the terms such as "first", "second", and the like are used in the present disclosure are used to describe various information, but the information should not be limited to these terms, and these terms are only used to distinguish the same type of information from each other. For example, without departing from the scope of the present disclosure, "first" information may be referred to as "second" information, and similarly, "second" information may also be referred to as "first" information.

### Embodiment 1

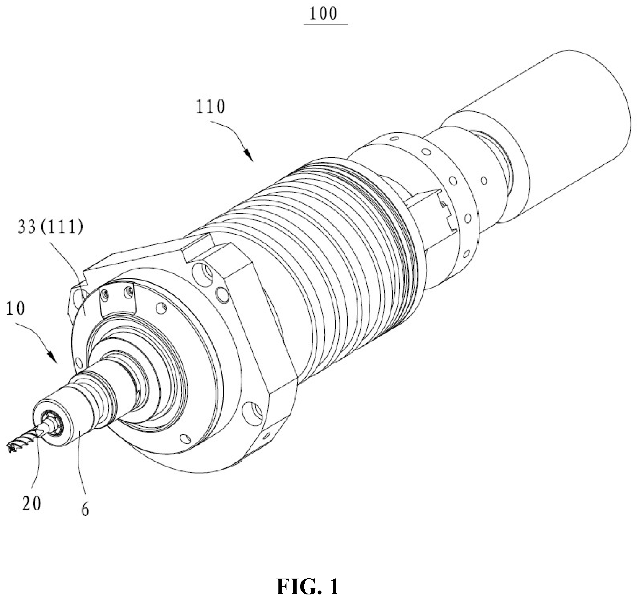

Referring to FIG. 1, FIG. 2, and FIG. 3, an embodiment of the present disclosure provides an axial-opposed-ring ultrasonic machining device (hereinafter referred to as an ultrasonic machining device 10), including a tool body 1, an ultrasonic transducer 2, and a wireless transmission mechanism 3. A rear end of the tool body 1 is assembled to a first rotary output unit 110 and rotates synchronously with the first rotary output unit 110, such that the first rotary output unit 110 serves as the rotary output device of this embodiment and is connected to the tool body 1 to output torque.

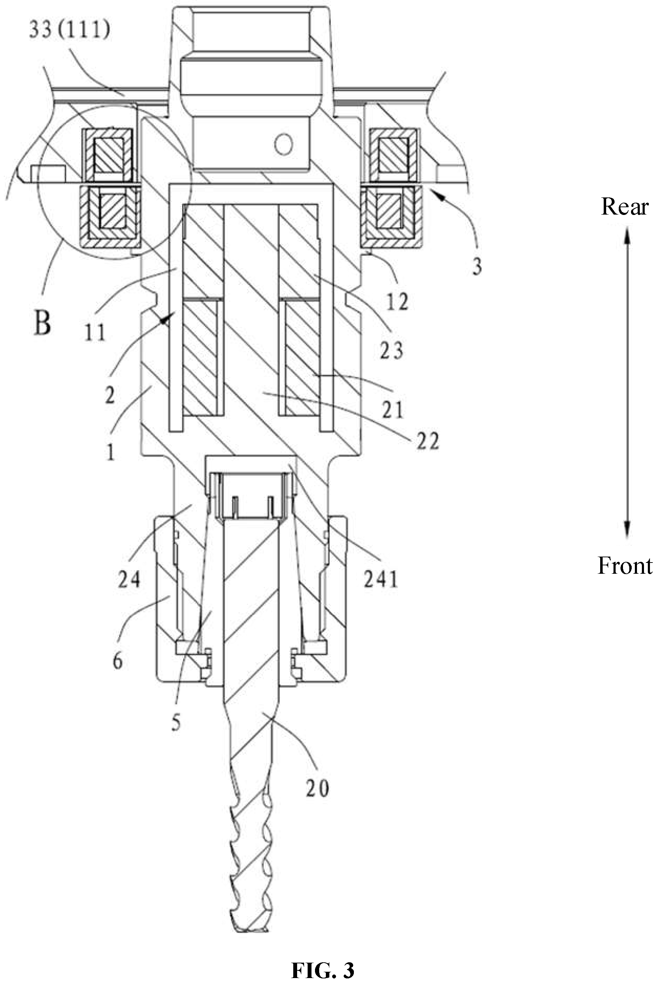

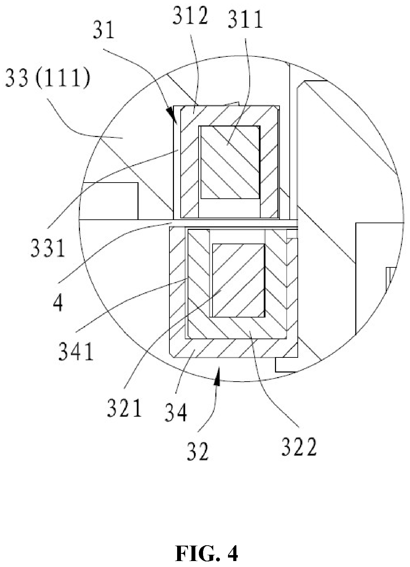

The wireless transmission mechanism 3 is disposed around an outer peripheral side of the tool body 1. Specifically, referring to FIG. 3 and FIG. 4, the wireless transmission mechanism 3 in this embodiment includes a transmitting unit 31 and a receiving unit 32. The transmitting unit 31 is disposed on the outer peripheral side of the tool body 1, and the receiving unit 32 is disposed on the outer peripheral side of the tool body 1. The transmitting unit 31 and the receiving unit 32 are arranged opposite each other along an axial direction of the tool body 1 and form an air gap 4. The transmitting unit 31 includes a transmitting coil 311 and a transmitting magnet configured to generate a magnetic field based on a current in the transmitting coil 311, and the receiving unit 32 includes a receiving coil 321 and a receiving magnet configured to receive the magnetic field generated by the transmitting unit 31.

In different embodiments, the transmitting magnet can be made of any one material selected from a group consisting of ferrite, neodymium iron boron, high-frequency ceramic material, powder metallurgy material, amorphous and nanocrystalline alloys, and cobalt iron, and the receiving magnet can be made of any one material selected from a group consisting of ferrite, neodymium iron boron, high-frequency ceramic material, powder metallurgy material, amorphous and nanocrystalline alloys, and cobalt iron.

Specifically, in this embodiment, both the transmitting magnet and the receiving magnet are made of ferrite material. Therefore, in the following description of this embodiment, the transmitting magnet is referred to as a transmitting ferrite 312, and the receiving magnet is referred to as a receiving ferrite 322. Furthermore, the transmitting unit 31 is in the form of a full ring or a partial ring disposed around the outer periphery of the tool body 1. It can be understood that the transmitting unit 31 extends around the outer periphery of the tool body 1 by an angle of θ, $\frac{π}{4} \leq θ \leq 2 π$. Preferably, $θ = \frac{π}{2}$, θ = π, θ = 2π . Specifically, θ is a central angle corresponding to the circumferential extension of the transmitting ferrite 312 along the tool body 1.

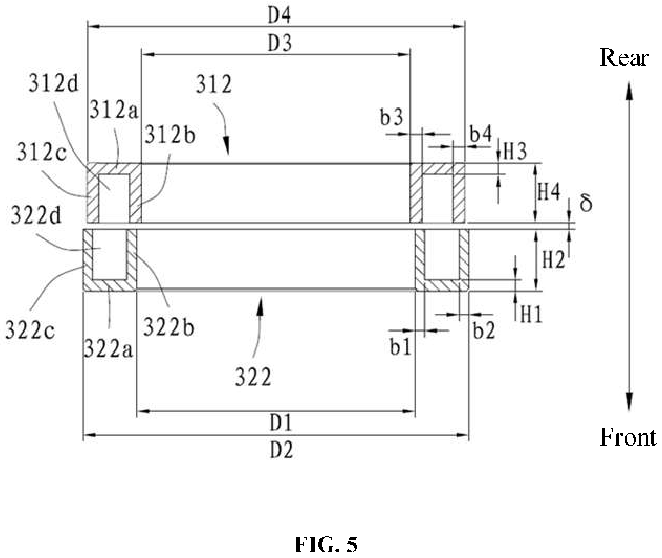

In this embodiment, θ = 2π. Referring to FIG. 3, FIG. 4, and FIG. 5, the transmitting ferrite 312 of this embodiment is accommodated in a first accommodating groove 331, and is annularly disposed on the outer peripheral side of the tool body 1. A front end surface of the transmitting ferrite 312 is provided with a first coil embedding groove 312d annularly disposed around the tool body 1, and the transmitting coil 311 is accommodated in the first coil embedding groove 312d. Specifically, the transmitting ferrite 312 of this embodiment includes a first annular base plate 312a, a first annular inner side plate 312b, and a first annular outer side plate 312c. The first annular inner side plate 312b is connected to an inner side of the first annular base plate 312a, and the first annular outer side plate 312c is connected to an outer side of the first annular base plate 312a. The first annular base plate 312a, the first annular inner side plate 312b, and the first annular outer side plate 312c form the first coil embedding groove 312d with an opening facing the receiving unit 32. A thickness of the first annular base plate 312a is H₃ mm, a thickness of the first annular inner side plate 312b is b₃ mm, a thickness of the first annular outer side plate 312c is b₄ mm, an axial extension length of the transmitting ferrite 312 along the tool body is H₄ mm, an inner diameter of the first annular inner side plate 312b is D₃ mm, and an outer diameter of the first annular outer side plate 312c is D₄ mm.

The receiving ferrite 322 is accommodated in a second accommodating groove 341, and is annularly disposed on the outer peripheral side of the tool body 1. A rear end surface of the receiving ferrite 322 is provided with a second coil embedding groove 322d annularly disposed around the tool body 1, and the receiving coil 321 is accommodated in the second coil embedding groove 322d. Specifically, the receiving ferrite 322 of this embodiment includes a second annular base plate 322a, a second annular inner side plate 322b, and a second annular outer side plate 322c. The second annular inner side plate 322b is connected to an inner side of the second annular base plate 322a, and the second annular outer side plate 322c is connected to an outer side of the second annular base plate 322a. The second annular base plate 322a, the second annular inner side plate 322b, and the second annular outer side plate 322c form the second coil embedding groove 322d with an opening facing the transmitting unit 31. A thickness of the second annular base plate 322a is H₁ mm, a thickness of the second annular inner side plate 322b is b₁ mm, a thickness of the second annular outer side plate 322c is b₂ mm, an axial extension length of the receiving ferrite 322 along the tool body is H₂ mm, an inner diameter of the second annular inner side plate 322b is D₁ mm, and an outer diameter of the second annular outer side plate 322c is D₂ mm.

Preferably, the above parameters of the transmitting ferrite 312 and the receiving ferrite 322 can be measured by a dial caliper of Mitutoyo or other length measuring tools.

The transmitting ferrite 312 and the receiving ferrite 322 have a relative permeability of u and a vacuum permeability of u₀ H/m, the second annular inner side plate 322b has a magnetic-circuit area of S₁, and the second annular outer side plate 322c has a magnetic-circuit area of S₂. S₁ and S₂ satisfy the following equations: ${S}_{1} = π \left[{\left(\frac{{D}_{1}}{2}+{b}_{1}\right)}^{2}-{\left(\frac{{D}_{1}}{2}\right)}^{2}\right]$ (1) ${S}_{2} = π \left[{\left(\frac{{D}_{2}}{2}\right)}^{2}-{\left(\frac{{D}_{2}}{2}-{b}_{2}\right)}^{2}\right]$ (2)

The second annular inner side plate 322b has a reluctance of R₁, the second annular outer side plate 322c has a reluctance of R₂, the second annular base plate 322a has a reluctance of R₃, and the receiving unit 32 has a reluctance of R_{rec}. The above parameters are expressed as follows: ${R}_{1} = \frac{{H}_{2} - {H}_{1}}{{S}_{1} \times u \times {u}_{0}} \times 1000$ (3) ${R}_{2} = \frac{{H}_{2} - {H}_{1}}{{S}_{2} \times u \times {u}_{0}} \times 1000$ (4) ${R}_{3} = \frac{ln \left(\frac{{D}_{2}}{{D}_{1}}\right)}{π \times 2 {H}_{1} \times u \times {u}_{0}} \times 1000$ (5) ${R}_{rec} = {R}_{1} + {R}_{2} + {R}_{3}$ (6)

The first annular inner side plate 312b has a magnetic-circuit area of S₃, and the first annular outer side plate 312c has a magnetic-circuit area of S₄. S₃ and S₄ satisfy the following equations: ${S}_{3} = π \left[{\left(\frac{{D}_{3}}{2}+{b}_{3}\right)}^{2}-{\left(\frac{{D}_{3}}{2}\right)}^{2}\right]$ (7) ${S}_{4} = π \left[{\left(\frac{{D}_{4}}{2}\right)}^{2}-{\left(\frac{{D}_{4}}{2}-{b}_{4}\right)}^{2}\right]$ (8)

The first annular inner side plate 312b has a reluctance of R₄, the first annular outer side plate 312c has a reluctance of R₅, the first annular base plate 312a has a reluctance of R₆, and the transmitting unit 31 has a reluctance of Rₜᵣₐ. The above parameters are expressed as follows: ${R}_{4} = \frac{{H}_{4} - {H}_{3}}{{S}_{3} \times u \times {u}_{0}} \times 1000$ (9) ${R}_{5} = \frac{{H}_{4} - {H}_{3}}{{S}_{4} \times u \times {u}_{0}} \times 1000$ (10) ${R}_{6} = \frac{ln \left(\frac{{D}_{4}}{{D}_{3}}\right)}{π \times 2 {H}_{3} \times u \times {u}_{0}} \times 1000$ (11) ${R}_{tra} = {R}_{4} + {R}_{5} + {R}_{6}$ (12)

The wireless transmission mechanism 3 has an air-gap reluctance of R_{δ} H⁻¹ and an air-gap width of δ mm, an equivalent air-gap magnetic-circuit area between the second annular inner side plate 322b and the first annular inner side plate 312b is S_{δ1}, an equivalent air-gap magnetic-circuit area between the second annular outer side plate 322c and the first annular outer side plate 312c is S_{δ2}, a vacuum permeability is u₀ H/m, an air-gap reluctance between the second annular inner side plate 322b and the first annular inner side plate 312b is R_{δ1}, an air-gap reluctance between the second annular outer side plate 322c and the first annular outer side plate 312c is R_{δ2}, and F₁, F₂, F₃, and F₄ are fringing flux coefficients configured to correct an influence of a fringing air-gap reluctance on the air-gap reluctance.

If b₁=b₃, then: ${S}_{δ 1} = π \left[{\left(\frac{{D}_{3}}{2}+{b}_{3}\right)}^{2}-{\left(\frac{{D}_{3}}{2}\right)}^{2}\right]$ (13) ${F}_{1} = 1 + \frac{δ}{\sqrt{{10}^{- 3} \times {S}_{δ 1}}} \times ln \left[\frac{{10}^{5} \times 2 \times \left({H}_{2}-{H}_{1}+{H}_{4}-{H}_{3}+δ\right)}{δ}\right]$ (14) ${R}_{δ 1} = \frac{16}{{F}_{1}} \times δ \times \left(\frac{1}{{u}_{0} \times {S}_{δ 1}}\right) \times 1000$ (15)

If b₂=b₄, then: ${S}_{δ 2} = π \left[{\left(\frac{{D}_{4}}{2}\right)}^{2}-{\left(\frac{{D}_{4} - 2 {b}_{4}}{2}\right)}^{2}\right]$ (16) ${F}_{2} = 1 + \frac{δ}{\sqrt{{10}^{- 3} \times {S}_{δ 2}}} \times ln \left[\frac{{10}^{5} \times 2 \times \left({H}_{2}-{H}_{1}+{H}_{4}-{H}_{3}+δ\right)}{δ}\right]$ (17) ${R}_{δ 2} = \frac{16}{{F}_{2}} \times δ \times \left(\frac{1}{{u}_{0} \times {S}_{δ 2}}\right) \times 1000$ (18)

If b₁>b₃, then w₁=b₁, w₂=b₃, and D=D₃. If b₃>b₁, then w₁=b₃, w₂=b₁, and D=D₁. Thus: ${F}_{3} = 1 + \frac{δ}{\sqrt{{10}^{- 3} \times π \left[{\left(\frac{D}{2}+{w}_{2}\right)}^{2}-{\left(\frac{D}{2}\right)}^{2}\right]}} \times ln \left[\frac{{10}^{5} \times 2 \times \left({H}_{2}-{H}_{1}+{H}_{4}-{H}_{3}+δ\right)}{δ}\right]$ (19) ${R}_{δ 1} = \frac{16}{{F}_{3}} \times \frac{1}{{u}_{0} \times π} \times \frac{1}{2 \times \frac{\left(\frac{{w}_{1} - {w}_{2}}{2}\right)}{δ} \times \left(\frac{D + {w}_{2}}{1000}\right)} \times ln \left[\frac{{\left(\frac{D}{2}+{w}_{2}\right)}^{2} - {\left(\frac{D}{2}\right)}^{2} + 2 \times \frac{\left(\frac{{w}_{1} - {w}_{2}}{2}\right)}{δ} \times \left(D+{w}_{2}\right) \times δ}{{\left(\frac{D}{2}+{w}_{2}\right)}^{2} - {\left(\frac{D}{2}\right)}^{2}}\right]$ (20)

If b₂>b₄, then w₁=b₂, w₂=b₄, and D=D₄. If b₄>b₂, then w₁=b₄, w₂=b₂, and D=D₂. Thus: ${F}_{4} = 1 + \frac{δ}{\sqrt{{10}^{- 3} \times π \left[{\left(\frac{D}{2}\right)}^{2}-{\left(\frac{D}{2}-{w}_{2}\right)}^{2}\right]}} \times ln \left[\frac{{10}^{5} \times 2 \times \left({H}_{2}-{H}_{1}+{H}_{4}-{H}_{3}+δ\right)}{δ}\right]$ (21) ${R}_{δ 2} = \frac{16}{{F}_{4}} \times \frac{1}{{u}_{0} \times π} \times \frac{1}{2 \times \frac{\left(\frac{{w}_{1} - {w}_{2}}{2}\right)}{δ} \times \left(\frac{D - {w}_{2}}{1000}\right)} \times ln \left[\frac{{\left(\frac{D}{2}\right)}^{2} - {\left(\frac{D}{2}-{w}_{2}\right)}^{2} + 2 \times \frac{\left(\frac{{w}_{1} - {w}_{2}}{2}\right)}{δ} \times \left(D-{w}_{2}\right) \times δ}{{\left(\frac{D}{2}\right)}^{2} - {\left(\frac{D}{2}-{w}_{2}\right)}^{2}}\right]$ (22)

Therefore, the air-gap reluctance R_{δ} of the wireless transmission mechanism 3 is expressed by the above parameters: ${R}_{δ} = {K}_{2} \times \left({R}_{δ 1}+{R}_{δ 2}\right)$ (23)

K₂ is a reluctance correction coefficient, 0.2≤K₂≤3. The basis for the value range of K₂ is that F₁, F₂, F₃, and F₄ are general expressions for correcting the air-gap reluctance in consideration of the fringing air-gap reluctance. However, under different air-gap widths, the magnetic circuit of the magnetic field shapes differ and the field division is complex, making it difficult for F₁, F₂, F₃, and F₄ to precisely correct the air-gap reluctance. To enable more accurate calculation of the air-gap reluctance under different air-gap widths, it is necessary to introduce the parameter K₂ to correct the air-gap reluctance. Preferably, 0.1≤δ≤3. Specifically, in different embodiments, the air-gap width δ is a distance between the transmitting unit 31 and the receiving unit 32, and may be 0.1 mm, 0.2 mm, 0.3 mm, 0.4 mm, 0.5 mm, 0.6 mm, 0.7 mm, 0.8 mm, 0.9 mm, 1 mm, 1.1 mm, 1.5 mm, 2 mm, 2.5 mm, or 3 mm. Preferably, the air-gap width δ is 0.4 mm, 0.5 mm, 0.6 mm, 0.7 mm, 0.8 mm, 0.9 mm, 1 mm, or 1.1 mm.

The transmitting unit 31 has an inductance of L_{dtra} H, the wireless transmission mechanism 3 has an air-gap reluctance of R_{δ} H⁻¹, the transmitting unit 31 has a reluctance of Rₜᵣₐ H⁻¹, the receiving unit 32 has a reluctance of R_{rec} H⁻¹, and a number of turns of the transmitting coil 311 is Nₜᵣₐ. Therefore, the following equation holds: ${L}_{dtra} = \frac{{N}_{tra}^{2}}{{R}_{δ} + {R}_{rec} + {R}_{tra}}$ (24)

Based on the above structure of the ultrasonic machining device 10 provided by this embodiment, a frequency of an electrical signal input to the receiving unit 32 is f Hz, a peak current applied to the transmitting unit 31 is Iₜᵣₐ A, the reluctance of the transmitting unit 31 is Rₜᵣₐ H⁻¹, the number of turns of the transmitting coil 311 as Nₜᵣₐ, the reluctance of the receiving unit 32 is R_{rec} H⁻¹, the air-gap reluctance of the wireless transmission mechanism 3 is R_{δ} H⁻¹, and the apparent power of the transmitting unit 31 is Qₜᵣₐ VA. Then the following equation holds: ${Q}_{tra} = \left(2\times f\times {L}_{dtra}\times {I}_{tra}^{2}\right) \times {K}_{1}$ (25)

Specifically, substituting Eq. (24) into Eq. (25) yields the relationship between the apparent power Qₜᵣₐ of the transmitting unit 31 in this embodiment and the above parameters: ${Q}_{tra} = \left[\frac{2 \times f \times {N}_{tra}^{2} \times {I}_{tra}^{2}}{{R}_{δ} + {R}_{rec} + {R}_{tra}}\right] \times {K}_{1}$ (26)

An inductance of the receiving unit 32 is L_{drec} H, a number of turns of the receiving coil 321 is N_{rec}, and the air-gap reluctance of the wireless transmission mechanism 3 is R_{δ} H⁻¹. Then the following equation holds: ${L}_{dre} = \frac{{N}_{rec}^{2}}{{R}_{δ} + {R}_{rec} + {R}_{tra}}$ (27)

A peak current applied to the receiving unit 32 is I_{rec} A, the reluctance of the transmitting unit 31 is Rₜᵣₐ H⁻¹, the reluctance of the receiving unit 32 is R_{rec} H⁻¹, the air-gap reluctance of the wireless transmission mechanism 3 is R_{δ} H⁻¹, the apparent power of the receiving unit 32 is Q_{rec} VA, and the number of turns of the receiving coil 321 is N_{rec}. Then the following equation holds: ${Q}_{rec} = \left(2\times f\times {L}_{drec}\times {I}_{rec}^{2}\right) \times {K}_{1}$ (28)

Substituting Eq. (27) into Eq. (28) yields the relationship between the apparent power Q_{rec} of the receiving unit 32 in this embodiment and the above parameters: ${Q}_{rec} = \left[\frac{2 \times f \times {N}_{rec}^{2} \times {I}_{rec}^{2}}{{R}_{δ} + {R}_{rec} + {R}_{tra}}\right] \times {K}_{1}$ (29)

It should be noted that since Eqs. (1) to (29) involve some parameters that need to be measured from the ultrasonic machining device 10, in order to avoid errors in the measured data, K₁ is set. K₁ serves as a correction coefficient, 0.5≤K₁≤1.5, configured to correct the error between the calculated apparent power and the optimal apparent power caused by human or equipment measurement errors during data measurement, such as the measurement error of the frequency of the electrical signal input to the receiving unit and the measurement error of the peak current. Typically, the measurement error of the frequency of the electrical signal is about 15%, and the measurement error of the peak current is about 20%. Therefore, it can be understood that when there is no error in the measured parameters, preferably K₁ is set to 1, 2≤Nₜᵣₐ≤240, and 2≤N_{rec}≤240.

Thus, the apparent powers of the transmitting unit 31 and the receiving unit 32 are obtained based on Eqs. (26) and (29). Based on the structural parameters of the transmitting unit 31 and the receiving unit 32 of the ultrasonic machining device 10 provided in this embodiment, after a current is applied, when operating under conditions where the peak current is applied and the apparent power obtained from the above equations is used, the apparent power and the peak current are matched with the structural parameters and performance of the transmitting unit 31 and the receiving unit 32 of the wireless transmission mechanism 3. Accordingly, the temperature rise of the wireless transmission mechanism 3 during operation is reduced, and the wireless transmission efficiency and continuous operation stability of the device are improved. Furthermore, based on reasonable machining requirements (e.g., a typical machining amplitude of 1-10 µm), the increase in the amplitude can be substantially consistent with the increase in the apparent power, thereby avoiding energy being converted into heat energy consumption and improving energy conversion efficiency.

Specifically, to verify that, after being matched with the applied peak current and apparent power based on the above equations, the receiving unit 32 and the transmitting unit 31 of the ultrasonic machining device 10 provided by the embodiment of the present disclosure have a lower temperature rise compared with the prior art while having an increase in the amplitude that is substantially the same as the increase in the apparent power, two groups of tests are conducted, with reference to the following tables:

In Table 1A and Table 1B, the transmitting unit 31 and the receiving unit 32 of a first ultrasonic machining device are reasonably designed based on the relationships among the parameters set forth in the above equations, and tests are conducted after applying a current to the first ultrasonic machining device. Meanwhile, based on the structural parameters of the first ultrasonic machining device, the apparent power Q1ₜᵣₐ of the transmitting unit 31 is obtained according to Eqs. (1) to (26): $Q {1}_{tra} = \left[\frac{2 \times f \times {N}_{tra}^{2} \times {I}_{tra}^{2}}{{R}_{δ} + {R}_{rec} + {R}_{tra}}\right]$

Based on the correction coefficient K₁, the setting range of Q1ₜᵣₐ is obtained.

According to Eqs. (1) to (23) and (27) to (29), the apparent power Q1_{rec} of the receiving unit 32 is obtained: $Q {1}_{rec} = \left[\frac{2 \times f \times {N}_{rec}^{2} \times {I}_{rec}^{2}}{{R}_{δ} + {R}_{rec} + {R}_{tra}}\right]$

Based on the correction coefficient K₁, the setting range of Q1_{rec} is obtained.

After the current is applied to the first ultrasonic machining device, a temperature rise measurement result of the first ultrasonic machining device during operation for a preset time t is obtained, under the condition that the transmitting unit 31 operates at the apparent power Q2ₜᵣₐ and the receiving unit 32 operates at the apparent power Q2_{rec}. Since the transmitting unit 31 and the receiving unit 32 of the first ultrasonic machining device are reasonably designed based on the relationships among the parameters set forth in the above equations, Q2ₜᵣₐ falls within the setting range of Q1ₜᵣₐ, and Q2_{rec} falls within the setting range of Q1_{rec}. Specifically, 0.5≤K₁≤1.5.

In addition, referring to Table 2A and Table 2B, a second ultrasonic machining device of the prior art is set as a comparative example. The structural parameters of the transmitting unit 31 and the receiving unit 32 of the second ultrasonic machining device are obtained. The structural parameters of the transmitting unit 31 of the second ultrasonic machining device are then substituted into Eqs. (1) to (26) to obtain the apparent power Q3ₜᵣₐ of the transmitting unit 31 of the second ultrasonic machining device, assuming that the transmitting unit 31 is reasonably designed: $Q {3}_{tra} = \left[\frac{2 \times f \times {N}_{tra}^{2} \times {I}_{tra}^{2}}{{R}_{δ} + {R}_{rec} + {R}_{tra}}\right]$

Based on the correction coefficient K₁, the setting range of Q3ₜᵣₐ is obtained.

The structural parameters of the receiving unit 32 of the second ultrasonic machining device are substituted into Eqs. (1) to (23) and (27) to (29) to obtain the apparent power Q3_{rec} of the receiving unit 32 of the second ultrasonic machining device, assuming that the receiving unit 32 is reasonably designed: $Q {3}_{rec} = \left[\frac{2 \times f \times {N}_{rec}^{2} \times {I}_{rec}^{2}}{{R}_{δ} + {R}_{rec} + {R}_{tra}}\right]$

Based on the correction coefficient K₁, the setting range of Q3_{rec} is obtained, specifically, 0.5≤K₁≤1.5.

After the current is applied to the second ultrasonic machining device, the actual apparent power Q4ₜᵣₐ of the transmitting unit 31 during operation and the actual apparent power Q4_{rec} of the receiving unit 32 are measured, and after the second ultrasonic machining device operates for the preset time t, a temperature rise measurement result of the second ultrasonic machining device during operation for the preset time t is obtained. In this case, Q4ₜᵣₐ does not fall within the setting range of Q3ₜᵣₐ, and Q4_{rec} does not fall within the setting range of Q3_{rec}. Therefore, the structural parameters and performance of the transmitting unit 31 and the receiving unit 32 of the second ultrasonic machining device are not matched, and the design of the transmitting unit 31 and the receiving unit 32 of the second ultrasonic machining device is unreasonable.

The test method is as follows:
At an ambient temperature of 24°C, the air gap width δ between the transmitting unit 31 and the receiving unit 32 of the first ultrasonic machining device and the second ultrasonic machining device is set to 0.3 mm. The transmitting unit 31 is connected to an ultrasonic generator, the receiving unit 32 is connected to the ultrasonic transducer 2, and the receiving unit 32 and the transmitting unit 31 are connected to a Yokogawa power oscilloscope to acquire the peak current Iₜᵣₐ and apparent power Qₜᵣₐ of the transmitting unit 31 and the peak current I_{rec} and apparent power Q_{rec} of the receiving unit 32. The frequency f of the electrical signal input to the receiving unit 32 is detected using a Tektronix oscilloscope.

**Table 1A**

| First ultrasonic machining device | | | | |
|---|---|---|---|---|
| f=26000 Hz; R_{δ}=2318457 H⁻¹; R_{rec}=34018 H⁻¹; Rₜᵣₐ=34018 H⁻¹; δ=0.3 mm | | | | |
| Test ambient temperature: 24°C; Preset operating time t: 10 min | | | | |
| Transmitting unit | | | | |
| N=15 | | | | |
| Iₜᵣₐ (A) | Range of Q1ₜᵣₐ (VA) | Q2ₜᵣₐ (VA) | Temperature of transmitting unit (°C) | Amplitude (µm) |
| 2.84 | 21-57.3 | 30.75 | 22.9 | 9.5 |
| | | | 30.0 | |
| | | | 35.0 | |
| | | | 41.0 | |
| | | | 52.0 | |
| 2.14 | 12.3-32.5 | 20 | 22.9 | 5 |
| | | | 26.0 | |
| | | | 33.0 | |
| | | | 38.0 | |
| | | | 43.0 | |
| 1.67 | 7.5-19.8 | 12 | 22.9 | 2.5 |
| | | | 24.0 | |
| | | | 29.0 | |
| | | | 33.0 | |
| | | | 38.0 | |

**Table 1B**

| First ultrasonic machining device | | | | |
|---|---|---|---|---|
| f=26000 Hz; R_{δ}=2318457 H⁻¹; R_{rec}=34018 H⁻¹; Rₜᵣₐ=34018 H⁻¹; δ=0.3 mm | | | | |
| Test ambient temperature: 24°C; Preset operating time t: 10 min | | | | |
| Receiving unit | | | | |
| N=65 | | | | |
| I_{rec} (A) | Range of Q1_{rec} (VA) | Q2_{rec} (VA) | Temperature of receiving unit (°C) | Amplitude (µm) |
| 0.73 | 27-71 | 49 | 22.9 | 9.5 |
| | | | 33.0 | |
| | | | 37.0 | |
| | | | 45.0 | |
| | | | 55.0 | |
| 0.6 | 18.2-48 | 33 | 22.9 | 5 |
| | | | 27.0 | |
| | | | 35.0 | |
| | | | 39.0 | |
| | | | 45.0 | |
| 0.45 | 10.2-27 | 18.6 | 22.9 | 2.5 |
| | | | 26.0 | |
| | | | 31.0 | |
| | | | 35.0 | |
| | | | 40.0 | |

**Table 2A**

| Second ultrasonic machining device | | | | |
|---|---|---|---|---|
| f=22800 Hz; R_{δ}=1589064 H⁻¹; R_{rec}=23557 H⁻¹; Rₜᵣₐ=23557 H⁻¹; δ=0.3 mm | | | | |
| Test ambient temperature: 24°C; Preset operating time t: 10 min | | | | |
| Transmitting unit | | | | |
| N=15 | | | | |
| Iₜᵣₐ (A) | Range of Q3ₜᵣₐ (VA) | Q4ₜᵣₐ (VA) | Temperature of transmitting unit (°C) | Amplitude (µm) |
| 2.73 | 25.7-67.7 | 21 | 21.5 | 0.7 |
| | | | 38.0 | |
| | | | 46.0 | |
| | | | 55.0 | |
| | | | 61.0 | |
| 1.8 | 11.2-29.5 | 9 | 21.0 | 0.5 |
| | | | 28.0 | |
| | | | 36.0 | |
| | | | 40.0 | |
| | | | 48.0 | |
| 1.2 | 5-13 | 3.5 | 22.5 | 0.3 |
| | | | 24.0 | |
| | | | 30.0 | |
| | | | 33.0 | |
| | | | 36.0 | |

**Table 2B**

| Second ultrasonic machining device | | | | |
|---|---|---|---|---|
| f=22800 Hz; R_{δ}=1589064 H⁻¹; R_{rec}=23557 H⁻¹; Rₜᵣₐ=23557 H⁻¹; δ=0.3 mm | | | | |
| Test ambient temperature: 24°C; Preset operating time t: 10 min | | | | |
| Receiving unit | | | | |
| N=65 | | | | |
| I_{rec} (A) | Range of Q3_{rec} (VA) | Q4_{rec} (VA) | Temperature of receiving unit (°C) | Amplitude (µm) |
| 0.78 | 39-103 | 33 | 21.5 | 0.7 |
| | | | 40.0 | |
| | | | 50.0 | |
| | | | 60.0 | |
| | | | 68.0 | |
| 0.52 | 17.5-46.1 | 13 | 21.0 | 0.5 |
| | | | 35.0 | |
| | | | 40.0 | |
| | | | 45.0 | |
| | | | 55.0 | |
| 0.34 | 7.5-19.7 | 5 | 22.5 | 0.3 |
| | | | 28.0 | |
| | | | 32.0 | |
| | | | 38.0 | |
| | | | 44.0 | |

It should be noted that Table 1A and Table 1B show the temperature rise data of the receiving unit 32 and the transmitting unit 31, and the amplitude data generated by the attached machining tool 20 when different magnitudes of currents are applied and continuous operation lasts for a preset time of 10 min at the preset ambient temperature, for the first ultrasonic machining device designed in accordance with Eqs. (26) and (29) of the present disclosure. Table 2A and Table 2B show the temperature rise data of the receiving unit 32 and the transmitting unit 31, and the amplitude data generated by the attached machining tool 20 when different magnitudes of currents are applied and continuous operation lasts for a preset time of 10 min at the preset ambient temperature, for the second ultrasonic machining device not designed in accordance with Eqs. (26) and (29) of the present disclosure.

It can be seen from Table 1A and Table 1B that, by reasonably designing the ultrasonic machining device 10 based on the equations of the present disclosure, the structural parameters and performance of the transmitting unit 31 and the receiving unit 32 can be matched with the applied peak current and the apparent power. During operation, the temperature rise of the wireless transmission mechanism 3 is reduced, and the wireless transmission efficiency and continuous operation stability of the device are improved. Furthermore, when the structural parameters and performance of the transmitting unit 31 and the receiving unit 32 are matched with the applied peak current and the apparent power, more energy of the ultrasonic machining device 10 can be effectively converted into useful work. During operation with different apparent powers, after the machining tool 20 is mounted, the increase in the amplitude generated at the machining end of the machining tool 20 can be substantially the same as the increase in the apparent power of the first ultrasonic machining device, thereby maintaining high energy conversion efficiency.

It can be seen from Table 2A and Table 2B that the temperature rise of the second ultrasonic machining device in Table 2A and Table 2B is significantly higher than that of the first ultrasonic machining device in Table 1A and Table 1B. Moreover, when the machining tool 20 is mounted on the second ultrasonic machining device, the increase in the amplitude at the machining end of the machining tool 20 differs greatly from the increase in the apparent power of the second ultrasonic machining device, resulting in a small change in amplitude while the apparent power increases, and low energy conversion efficiency. That is, the structural parameters and performance of the transmitting unit 31 and the receiving unit 32 of the second ultrasonic machining device are not matched, and therefore the design of the transmitting unit 31 and the receiving unit 32 is unreasonable. During operation of such a second ultrasonic machining device, a higher proportion of the energy of the wireless transmission mechanism 3 is dissipated as heat, causing the temperature rise rate of such a second ultrasonic machining device to be significantly higher than that of the first ultrasonic machining device shown in Table 1A and Table 1B. Moreover, the increase in the amplitude at the machining end of the machining tool 20 of such a second ultrasonic machining device differs greatly from the increase in the apparent power, resulting in that the amplitude of the machining tool 20 lags behind and changes only slightly when the apparent power of such a second ultrasonic machining device increases, and the overall effective energy conversion efficiency of the wireless transmission mechanism 3 is relatively low.

It should be noted that the apparent powers Q2ₜᵣₐ, Q2_{rec}, Q4ₜᵣₐ, and Q4_{rec}, as well as the peak currents Iₜᵣₐ and I_{rec} of the first ultrasonic machining device and the second ultrasonic machining device are all measured by a Yokogawa power oscilloscope (model: PX8000). Specifically, Embodiment 1 provides a measurement method as follows:
The CH1 voltage probe of the Yokogawa power oscilloscope is connected to positive and negative terminals of the transmitting unit 31, and the CH1 current probe is connected to the transmitting unit 31. The current direction of the CH1 current probe is set to flow from the positive terminal to the negative terminal.

The CH2 voltage probe of the Yokogawa power oscilloscope is connected to positive and negative terminals of the receiving unit 32, and the CH2 current probe is connected to the receiving unit 32. The current direction of the CH2 current probe is set to flow from the positive terminal to the negative terminal.

The ELEM1 button is pressed to activate the CH1 measurement channel. The U1 button is pressed, and voltage measurement is selected. The I1 button is pressed, and current measurement is selected. The P1 button is pressed, and power measurement is selected.

The ELEM2 button is pressed to activate the CH2 measurement channel. The U2 button is pressed, and voltage measurement is selected. The 12 button is pressed, and current measurement is selected. The P2 button is pressed, and power measurement is selected.

The "MODE" button is pressed, and the "NumerictWave" mode is selected in the "DISPLAY MODE" menu. The "SETTING" button is pressed, and in the "NUMERIC SETTING" menu, "Format" is set to "16Items".

The "START/STOP" button is pressed to start the test. The apparent powers and the peak currents of the transmitting unit 31 and the receiving unit 32 are acquired from the data displayed on the screen, where I+pk1 denotes the CH1 current peak, i.e., the peak current applied to the transmitting unit 31; S₁ denotes the CH1 apparent power, i.e., the apparent power of the transmitting unit 31; I+pk2 denotes the CH2 current peak, i.e., the peak current applied to the receiving unit 32; and S₂ denotes the CH2 apparent power, i.e., the apparent power of the receiving unit 32.

In addition, in the first ultrasonic machining device and the second ultrasonic machining device, the frequency f of the electrical signal input to the receiving unit 32 is measured by a Tektronix oscilloscope (model: MDO3024). Specifically, Embodiment 1 provides a measurement method as follows:

The differential probe is inserted into the CH1 port and connected to the positive and negative terminals of the receiving unit 32.

"Menu" is opened, "Edge" is selected under "Type", "1" is selected under "Source", "AC" is selected under "Coupling", "Rising Edge" is selected under "Slope", "Level" is set to "0 V", and "Auto" is selected under "Mode".

The button "1" is pressed to activate a CH1 measurement channel, and AC coupling mode is selected from the options that pop up at the bottom of the screen. The "Measure" button in the Wave Inspector button area is pressed, "Add Measurement" is selected from the options that pop up at the bottom of the screen, "1" is selected under "Source", "Frequency" is selected under "Measurement Type", and then "OK Add Measurement" is selected.

The "Run/Stop" button is pressed to start the test. After the frequency sweep of the ultrasonic power supply is completed, the measured frequency on the screen is read and recorded, and this frequency is the frequency f of the electrical signal input to the receiving unit 32.

It should be noted that in this embodiment, the transmitting ferrite 312 and the receiving ferrite 322 of each of the first ultrasonic machining device and the second ultrasonic machining device are made of manganese-zinc ferrite material, with a relative permeability u of 2500. The apparent powers Q2ₜᵣₐ, Q2_{rec}, and Q4ₜᵣₐ, Q4_{rec}, as well as peak currents Iₜᵣₐ and I_{rec} in the first ultrasonic machining device and the second ultrasonic machining device are all measured by a Yokogawa power oscilloscope (model: PX8000). The frequency f of the electrical signal input to the receiving unit 32 in the first ultrasonic machining device and the second ultrasonic machining device is measured by a Tektronix oscilloscope (model: MDO3024).

In addition, the machining tool assembled in the first ultrasonic machining device and the second ultrasonic machining device in this embodiment is a D6 flat-end mill with an overhang length of 20 mm. In different tests, different machining tools and corresponding overhang lengths may also be employed, such as a D₄ tungsten steel rod with an overhang length of 20 mm, or a D₁6 flat-end mill with an overhang length of 50 mm.

### Embodiment 2

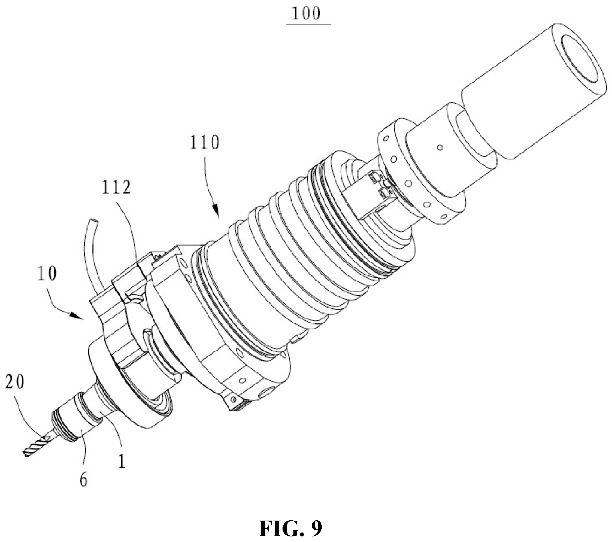

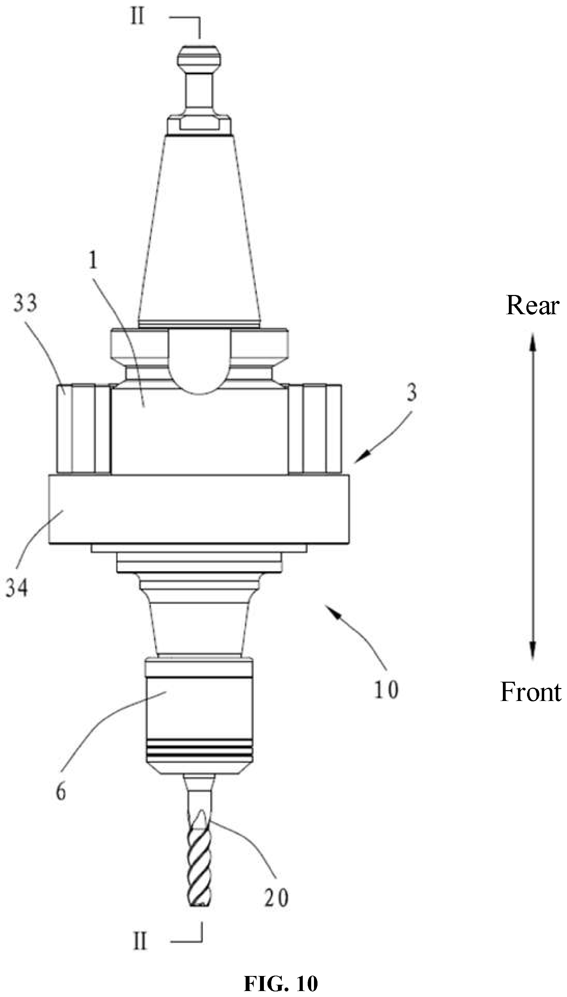

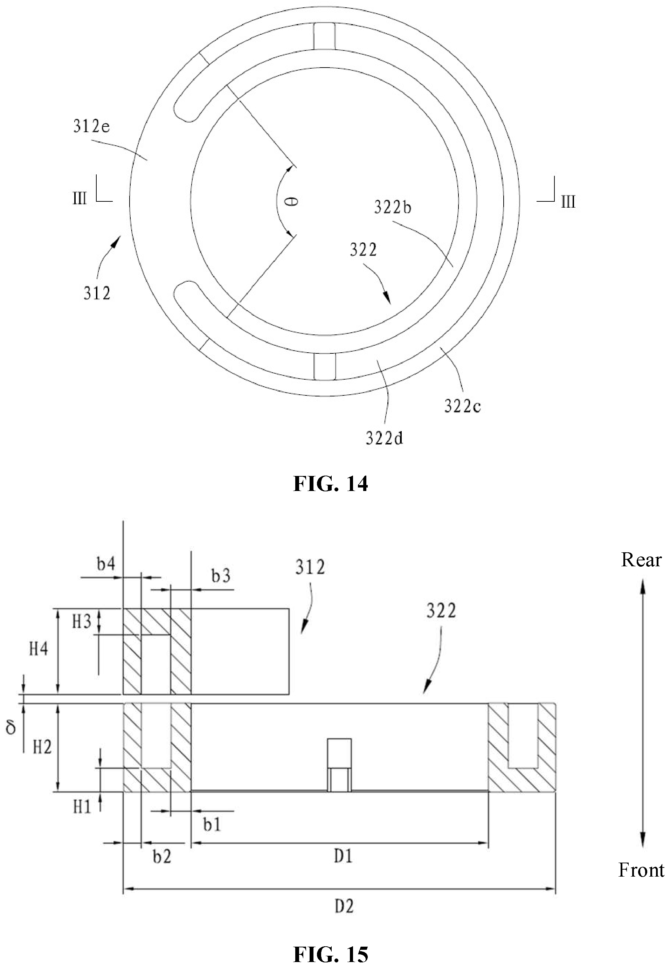

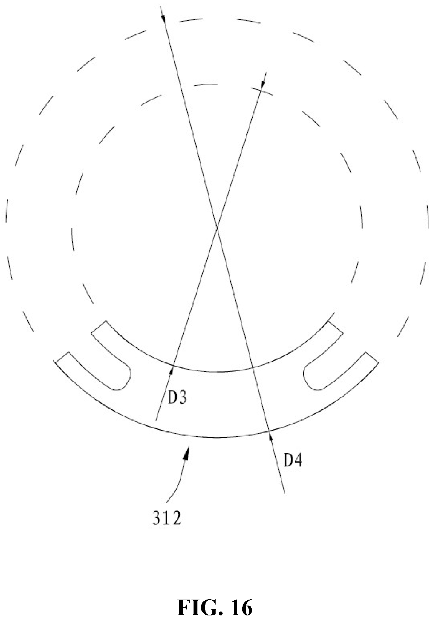

Referring to FIGS. 9 to 16, this embodiment differs from Embodiment 1 in that $θ = \frac{π}{2}$. It should be noted that in this embodiment, the transmitting magnet and the receiving magnet are made of ferrite material. Therefore, in the following description of this embodiment, the transmitting magnet is referred to as transmitting ferrite 312, and the receiving magnet is referred to as receiving ferrite 322.

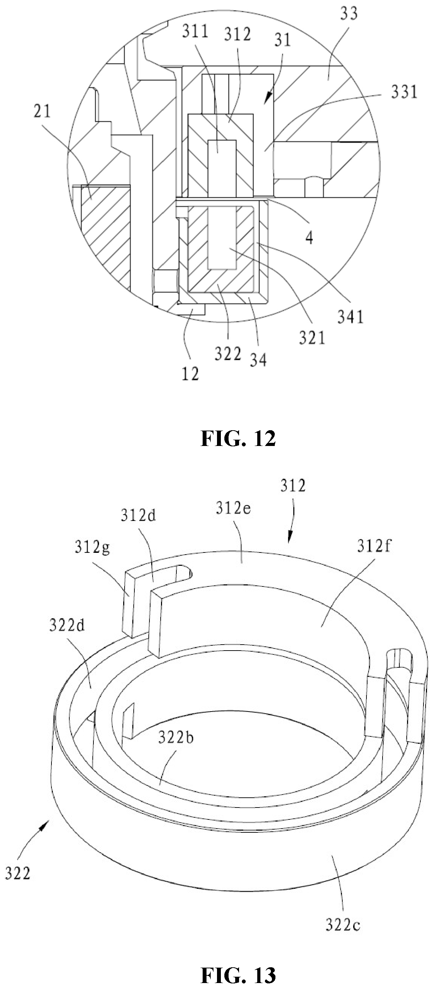

Furthermore, referring to FIGS. 12 to 15, the transmitting ferrite 312 is accommodated in a first accommodating groove 331, and a front end surface of the transmitting ferrite 312 is provided with a first coil embedding groove 312d. Specifically, the transmitting ferrite 312 of this embodiment includes an arc-shaped base plate 312e, an arc-shaped inner side plate 312f, and an arc-shaped outer side plate 312g. The arc-shaped inner side plate 312f is connected to an inner side of the arc-shaped base plate 312e, and the arc-shaped outer side plate 312g is connected to an outer side of the arc-shaped base plate 312e. Preferably, the arc-shaped base plate 312e, the arc-shaped outer side plate 312g, and the arc-shaped inner side plate 312f are concentrically arranged. The arc-shaped base plate 312e, the arc-shaped inner side plate 312f, and the arc-shaped outer side plate 312g form the first coil embedding groove 312d with an opening facing the receiving unit 32. A thickness of the arc-shaped base plate 312e is H₃ mm, a thickness of the arc-shaped inner side plate 312f is b₃ mm, a thickness of the arc-shaped outer side plate 312g is b₄ mm, an axial extension length of the transmitting ferrite 312 along the tool body is H₄ mm, an inner diameter of the arc-shaped inner side plate 312f is D₃ mm, and an outer diameter of the arc-shaped outer side plate 312g is D₄ mm.

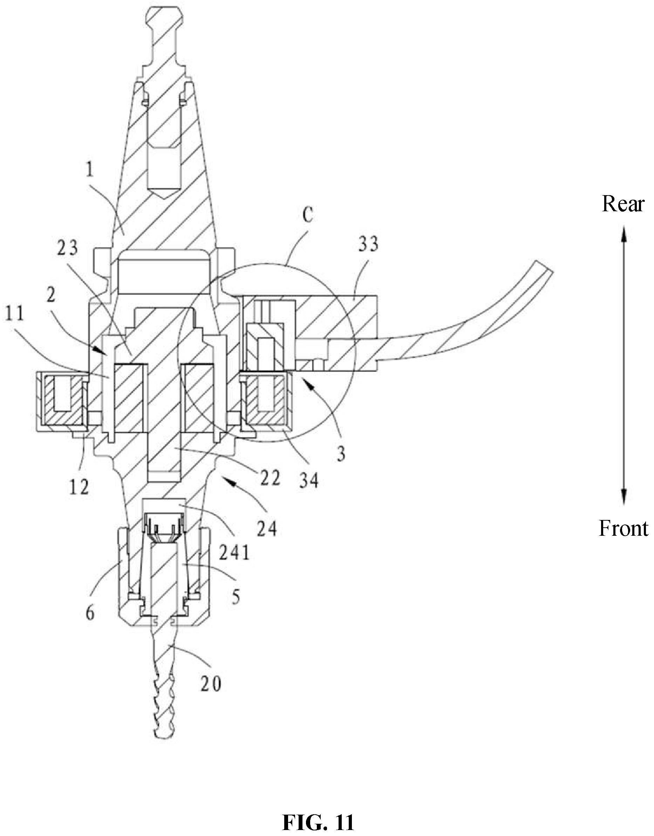

Referring to FIGS. 11 to 16, the transmitting coil 311 is disposed around the arc-shaped base plate 312e or the arc-shaped outer side plate 312g. In this embodiment, the transmitting coil 311 is disposed around the arc-shaped outer side plate 312g, and is partially embedded in the first coil embedding groove 312d. Based on this structure, when the transmitting coil 311 is energized, the generated magnetic flux lines exit from a front end surface of the arc-shaped outer side plate 312g toward the receiving unit 32, and return from a front end surface of the arc-shaped inner side plate 312f after passing through the receiving unit 32.

Referring to FIGS. 11 to 16, the receiving ferrite 322 is accommodated in a second accommodating groove 341. A rear end surface of the receiving ferrite 322 is provided with a second coil embedding groove 322d annularly disposed around the tool body 1, and the receiving coil 321 is accommodated in the second coil embedding groove 322d. Specifically, the receiving ferrite 322 of this embodiment includes a second annular base plate 322a, a second annular inner side plate 322b, and a second annular outer side plate 322c. The second annular inner side plate 322b is connected to an inner side of the second annular base plate 322a, and the second annular outer side plate 322c is connected to an outer side of the second annular base plate 322a. The second annular base plate 322a, the second annular inner side plate 322b, and the second annular outer side plate 322c form the second coil embedding groove 322d with an opening facing the transmitting unit 31. A thickness of the second annular base plate 322a is H₁ mm, a thickness of the second annular inner side plate 322b is b₁ mm, a thickness of the second annular outer side plate 322c is b₂ mm, an axial extension length of the receiving ferrite 322 along the tool body is H₂ mm, an inner diameter of the second annular inner side plate 322b is D₁ mm, and an outer diameter of the second annular outer side plate 322c is D₂ mm.

The transmitting ferrite 312 and the receiving ferrite 322 have a relative permeability of u and a vacuum permeability of u₀ H/m, the second annular inner side plate 322b of the receiving ferrite 322 has a magnetic-circuit area of S₁, and the second annular outer side plate 322c has a magnetic-circuit area of S₂. S₁ and S₂ satisfy the following equations: ${S}_{1} = \frac{π}{4} \left[{\left(\frac{{D}_{1}}{2}+{b}_{1}\right)}^{2}-{\left(\frac{{D}_{1}}{2}\right)}^{2}\right]$ (30) ${S}_{2} = \frac{π}{4} \left[{\left(\frac{{D}_{2}}{2}\right)}^{2}-{\left(\frac{{D}_{2}}{2}-{b}_{2}\right)}^{2}\right]$ (31)

The second annular inner side plate 322b has a reluctance of R₁, the second annular outer side plate 322c has a reluctance of R₂, the second annular base plate 322a has a reluctance of R₃, and the receiving unit 32 has a reluctance of R_{rec}. The above parameters are expressed as follows: ${R}_{1} = \frac{{H}_{2} - {H}_{1}}{{S}_{1} \times u \times {u}_{0}} \times 1000$ (32) ${R}_{2} = \frac{{H}_{2} - {H}_{1}}{{S}_{2} \times u \times {u}_{0}} \times 1000$ (33) ${R}_{3} = \frac{ln \left(\frac{{D}_{2}}{{D}_{1}}\right)}{\frac{π}{4} \times 2 {H}_{1} \times u \times {u}_{0}} \times 1000$ (34) ${R}_{rec} = {R}_{1} + {R}_{2} + {R}_{3}$ (35)

The arc-shaped inner side plate 312f has a magnetic-circuit area of S₃, and the arc-shaped outer side plate 312g has a magnetic-circuit area of S₄. S₃ and S₄ satisfy the following equations: ${S}_{3} = \frac{π}{4} \left[{\left(\frac{{D}_{3}}{2}+{b}_{3}\right)}^{2}-{\left(\frac{{D}_{3}}{2}\right)}^{2}\right]$ (36) ${S}_{4} = \frac{π}{4} \left[{\left(\frac{{D}_{4}}{2}\right)}^{2}-{\left(\frac{{D}_{4}}{2}-{b}_{4}\right)}^{2}\right]$ (37)

The arc-shaped inner side plate 312f has a reluctance of R₄, the arc-shaped outer side plate 312g has a reluctance of R₅, the arc-shaped base plate 312e has a reluctance of R₆, and the transmitting unit 31 has a reluctance of Rₜᵣₐ. The above parameters are expressed as follows: ${R}_{4} = \frac{{H}_{4} - {H}_{3}}{{S}_{3} \times u \times {u}_{0}} \times 1000$ (38) ${R}_{5} = \frac{{H}_{4} - {H}_{3}}{{S}_{4} \times u \times {u}_{0}} \times 1000$ (39) ${R}_{6} = \frac{ln \left(\frac{{D}_{4}}{{D}_{3}}\right)}{\frac{π}{4} \times 2 {H}_{3} \times u \times {u}_{0}} \times 1000$ (40) ${R}_{tra} = {R}_{4} + {R}_{5} + {R}_{6}$ (41)

The wireless transmission mechanism 3 has an air-gap reluctance of R_{δ} H⁻¹ and an air-gap width of δ mm, an equivalent air-gap magnetic-circuit area between the second annular inner side plate 322b and the arc-shaped inner side plate 312f is S_{δ1}, an equivalent air-gap magnetic-circuit area between the second annular outer side plate 322c and the arc-shaped outer side plate 312g is S_{δ2}, a vacuum permeability is u₀ H/m, an air-gap reluctance between the second annular inner side plate 322b and the arc-shaped inner side plate 312f is R_{δ1}, an air-gap reluctance between the second annular outer side plate 322c and the arc-shaped outer side plate 312g is R_{δ2}, and F₁, F₂, F₃, and F₄ are fringing flux coefficients configured to correct an influence of a fringing air-gap reluctance on the air-gap reluctance.

If b₁=b₃, then: ${S}_{δ 1} = \frac{π}{4} \left[{\left(\frac{{D}_{3}}{2}+{b}_{3}\right)}^{2}-{\left(\frac{{D}_{3}}{2}\right)}^{2}\right]$ (42) ${F}_{1} = 1 + \frac{δ}{\sqrt{{10}^{- 3} \times {S}_{δ 1}}} \times ln \left[\frac{{10}^{5} \times 2 \times \left({H}_{2}-{H}_{1}+{H}_{4}-{H}_{3}+δ\right)}{δ}\right]$ (43) ${R}_{δ 1} = \frac{8}{{F}_{1}} \times δ \times \left(\frac{1}{{u}_{0} \times {S}_{δ 1}}\right) \times 1000$ (44)

If b₂=b₄, then: ${S}_{δ 2} = \frac{π}{4} \left[{\left(\frac{{D}_{4}}{2}\right)}^{2}-{\left(\frac{{D}_{4} - 2 {b}_{4}}{2}\right)}^{2}\right]$ (45) ${F}_{2} = 1 + \frac{δ}{\sqrt{{10}^{- 3} \times {S}_{δ 2}}} \times ln \left[\frac{{10}^{5} \times 2 \times \left({H}_{2}-{H}_{1}+{H}_{4}-{H}_{3}+δ\right)}{δ}\right]$ (46) ${R}_{δ 2} = \frac{8}{{F}_{2}} \times δ \times \left(\frac{1}{{u}_{0} \times {S}_{δ 2}}\right) \times 1000$ (47)

If b₁>b₃, then w₁=b₁, w₂=b₃, and D=D₃. If b₃>b₁, then w₁=b₃, w₂=b₁, and D=D₁. Thus: ${F}_{3} = 1 + \frac{δ}{\sqrt{{10}^{- 3} \times \frac{π}{4} \times \left[{\left(\frac{D}{2}+{w}_{2}\right)}^{2}-{\left(\frac{D}{2}\right)}^{2}\right]}} \times ln \left[\frac{{10}^{5} \times 2 \times \left({H}_{2}-{H}_{1}+{H}_{4}-{H}_{3}+δ\right)}{δ}\right]$ (48) ${R}_{δ 1} = \frac{δ}{{F}_{3}} \times \frac{1}{{u}_{0} \times \frac{π}{4}} \times \frac{1}{2 \times \frac{\left(\frac{{w}_{1} - {w}_{2}}{2}\right)}{δ} \times \left(\frac{D + {w}_{2}}{1000}\right)} \times ln \left[\frac{{\left(\frac{D}{2}+{w}_{2}\right)}^{2} - {\left(\frac{D}{2}\right)}^{2} + 2 \times \frac{\left(\frac{{w}_{1} - {w}_{2}}{2}\right)}{δ} \times \left(D+{w}_{2}\right) \times δ}{{\left(\frac{D}{2}+{w}_{2}\right)}^{2} - {\left(\frac{D}{2}\right)}^{2}}\right]$ (49)

If b₂>b₄, then w₁=b₂, w₂=b₄, and D=D₄. If b₄>b₂, then w₁=b₄, w₂=b₂, and D=D₂. Thus: ${F}_{4} = 1 + \frac{δ}{\sqrt{{10}^{- 3} \times \frac{π}{4} \times \left[{\left(\frac{D}{2}\right)}^{2}-{\left(\frac{D}{2}+{w}_{2}\right)}^{2}\right]}} \times ln \left[\frac{{10}^{5} \times 2 \times \left({H}_{2}-{H}_{1}+{H}_{4}-{H}_{3}+δ\right)}{δ}\right]$ (50) $\begin{matrix}{R}_{δ 2} = \frac{δ}{{F}_{4}} \times \frac{1}{{u}_{0} \times \frac{π}{4}} \times \frac{1}{2 \times \frac{\left(\frac{{w}_{1} - {w}_{2}}{2}\right)}{δ} \times \left(\frac{D - {w}_{2}}{1000}\right)} \times ln \left[\frac{{\left(\frac{D}{2}\right)}^{2} - {\left(\frac{D}{2}-{w}_{2}\right)}^{2} + 2 \times \frac{\left(\frac{{w}_{1} - {w}_{2}}{2}\right)}{δ} \times \left(D-{w}_{2}\right) \times δ}{{\left(\frac{D}{2}\right)}^{2} - {\left(\frac{D}{2}-{w}_{2}\right)}^{2}}\right] \left(51\right) \\ {R}_{δ} = {K}_{2} \times \left({R}_{δ 1}+{R}_{δ 2}\right) \left(52\right)\end{matrix}$ (51)

K₂ is a reluctance correction coefficient, 0.2≤K₂≤3. The basis for the value range of K₂ is that F₁, F₂, F₃, and F₄ are general expressions for correcting the air-gap reluctance in consideration of the fringing air-gap reluctance. However, under different air-gap widths, the magnetic circuit of the magnetic field shapes differ and the field division is complex, making it difficult for F₁, F₂, F₃, and F₄ to precisely correct the air-gap reluctance. To enable more accurate calculation of the air-gap reluctance under different air-gap widths, it is necessary to introduce the parameter K₂ to correct the air-gap reluctance.

Preferably, 0.1≤δ≤3. Specifically, in different embodiments, the air-gap width δ is a distance between the transmitting unit 31 and the receiving unit 32, and may be 0.1 mm, 0.2 mm, 0.3 mm, 0.4 mm, 0.5 mm, 0.6 mm, 0.7 mm, 0.8 mm, 0.9 mm, 1 mm, 1.1 mm, 1.5 mm, 2 mm, 2.5 mm, or 3 mm. Preferably, the air-gap width δ is 0.4 mm, 0.5 mm, 0.6 mm, 0.7 mm, 0.8 mm, 0.9 mm, 1 mm, or 1.1 mm.

The transmitting unit 31 has an inductance of L_{dtra} H, the wireless transmission mechanism 3 has an air-gap reluctance of R_{δ} H⁻¹, the transmitting unit 31 has a reluctance of Rₜᵣₐ H⁻¹, the receiving unit 32 has a reluctance of R_{rec} H⁻¹, and a number of turns of the transmitting coil 311 is Nₜᵣₐ. Therefore, the following equation holds: ${L}_{dtra} = \frac{{N}_{tra}^{2}}{{R}_{δ} + {R}_{rec} + {R}_{tra}}$ (53)

Based on the above structure of the ultrasonic machining device 10 provided by this embodiment, a frequency of an electrical signal input to the receiving unit 32 is f Hz, the number of turns of the transmitting coil 311 as Nₜᵣₐ, a peak current applied to the transmitting unit 31 is Iₜᵣₐ A, the reluctance of the transmitting unit 31 is Rₜᵣₐ H⁻¹, the reluctance of the receiving unit 32 is R_{rec} H⁻¹, the air-gap reluctance of the wireless transmission mechanism 3 is R_{δ} H⁻¹, and the apparent power of the transmitting unit 31 is Qₜᵣₐ VA. Then the following equation holds: ${Q}_{tra} = \left(2\times f\times {L}_{dtra}\times {I}_{tra}^{2}\right) \times {K}_{1}$ (54)

Specifically, substituting Eq. (53) into Eq. (54) yields the relationship between the apparent power Qₜᵣₐ of the transmitting unit 31 in this embodiment and the above parameters: ${Q}_{tra} = \left[\frac{2 \times f \times {N}_{tra}^{2} \times {I}_{tra}^{2}}{{R}_{δ} + {R}_{rec} + {R}_{tra}}\right] \times {K}_{1}$ (55)

An inductance of the receiving unit 32 is L_{drec} H, a number of turns of the receiving coil 321 is N_{rec}, and the air-gap reluctance of the wireless transmission mechanism 3 is R_{δ} H⁻¹. Then the following equation holds: ${L}_{dre} = \frac{{N}_{rec}^{2}}{{R}_{δ} + {R}_{rec} + {R}_{tra}}$ (56)

Furthermore, the peak current applied to the receiving unit 32 is I_{rec} A, the reluctance of the transmitting unit 31 is Rₜᵣₐ H⁻¹, the air-gap reluctance of the wireless transmission mechanism 3 is R_{δ} H⁻¹, the reluctance of the receiving unit 32 is R_{rec} H⁻¹, the number of turns of the receiving coil 321 is N_{rec}, and the apparent power of the receiving unit 32 is Q_{rec} VA. Then the following equation holds: ${Q}_{rec} = \left(2\times f\times {L}_{dre}\times {I}_{rec}^{2}\right) \times {K}_{1}$ (57)

Substituting Eq. (56) into Eq. (57) yields the relationship between the apparent power Q_{rec} of the receiving unit 32 in this embodiment and the above parameters: ${Q}_{rec} = \left[\frac{2 \times f \times {N}_{rec}^{2} \times {Ι}_{rec}^{2}}{{R}_{δ} + {R}_{rec} + {R}_{tra}}\right] \times {K}_{1}$ (58)

It should be noted that since Eqs. (30) to (58) involve some parameters that need to be measured from the ultrasonic machining device 10, in order to avoid errors in the measured data, K₁ is set. K₁ serves as a correction coefficient, 0.5≤K₁≤1.5, configured to correct the error between the calculated apparent power and the optimal apparent power caused by human errors during data measurement, such as the measurement error of the frequency of the electrical signal input to the receiving unit 32 and the measurement error of the peak current. Typically, the measurement error of the frequency of the electrical signal is about 15%, and the measurement error of the peak current is about 20%. Therefore, it can be understood that when there is no error in the measured parameters, preferably K₁ is set to 1, 2≤Nₜᵣₐ≤240, and 2≤N_{rec}≤240.

Thus, the apparent powers of the transmitting unit 31 and the receiving unit 32 are obtained based on Eqs. (55) and (58). The ultrasonic machining device 10 of this embodiment operates under the structural parameters of the transmitting unit 31 and the receiving unit 32, the applied peak current after the current is applied, and the apparent power obtained based on the above equations. The apparent power and peak current are matched with the structural parameters and performance of the transmitting unit 31 and the receiving unit 32 of the wireless transmission mechanism 3. Accordingly, the temperature rise of the wireless transmission mechanism 3 during operation is reduced, and the wireless transmission efficiency and continuous operation stability of the device are improved. Furthermore, based on reasonable machining requirements, the increase in the amplitude can be substantially consistent with the increase in the apparent power, thereby avoiding energy being converted into heat energy consumption and improving energy conversion efficiency.

Specifically, to verify that, after being matched with the applied peak current and apparent power based on the above equations, the receiving unit 32 and the transmitting unit 31 of the ultrasonic machining device 10 provided by the embodiment of the present disclosure have a lower temperature rise compared with the prior art while having an increase in the amplitude that is substantially the same as the increase in the apparent power, two groups of tests are conducted, with reference to the following tables:

In Table 3A and Table 3B, the transmitting unit 31 and the receiving unit 32 of a third ultrasonic machining device are reasonably designed based on the above equations, and tests are conducted after applying a current to the third ultrasonic machining device. Meanwhile, based on the structural parameters of the third ultrasonic machining device, the apparent power Q5ₜᵣₐ of the transmitting unit 31 is obtained according to Eqs. (30) to (55): $Q {5}_{tra} = \left[\frac{2 \times f \times {N}_{tra}^{2} \times {I}_{tra}^{2}}{{R}_{δ} + {R}_{rec} + {R}_{tra}}\right]$

Based on the correction coefficient K₁, the setting range of Q5ₜᵣₐ is obtained.

According to Eqs. (30) to (52) and (56) to (58), the relationship between the apparent power Q5_{rec} of the receiving unit 32 and the above parameters is obtained: $Q {5}_{rec} = \left[\frac{2 \times f \times {N}_{rec}^{2} \times {I}_{rec}^{2}}{{R}_{δ} + {R}_{rec} + {R}_{tra}}\right]$

Based on the correction coefficient K₁, the setting range of Q5_{rec} is obtained.

After the current is applied to the third ultrasonic machining device, a temperature rise measurement result of the third ultrasonic machining device during operation for a preset time t is obtained, under the condition that the transmitting unit 31 operates at the apparent power Q6ₜᵣₐ and the receiving unit 32 operates at the apparent power Q6_{rec}. Since the transmitting unit 31 and the receiving unit 32 of the third ultrasonic machining device are reasonably designed based on the relationships among the parameters set forth in the above equations, Q6ₜᵣₐ falls within the setting range of Q5ₜᵣₐ, and Q6_{rec} falls within the setting range of Q5_{rec}. Specifically, 0.5≤K₁≤1.5.

In addition, referring to Table 4A and Table 4B, a fourth ultrasonic machining device of the prior art is set as a comparative example. The structural parameters of the transmitting unit 31 and the receiving unit 32 of the fourth ultrasonic machining device are obtained. The structural parameters of the transmitting unit 31 of the fourth ultrasonic machining device are then substituted into Eqs. (30) to (55) to obtain the apparent power Q7ₜᵣₐ of the transmitting unit 31 of the fourth ultrasonic machining device, assuming that the transmitting unit 31 is reasonably designed: $Q {7}_{tra} = \left[\frac{2 \times f \times {N}_{tra}^{2} \times {I}_{tra}^{2}}{{R}_{δ} + {R}_{rec} + {R}_{tra}}\right]$

Based on the correction coefficient K₁, the setting range of Q7ₜᵣₐ is obtained.

The structural parameters of the receiving unit 32 of the fourth ultrasonic machining device are substituted into Eqs. (30) to (52) and (56) to (58) to obtain the apparent power Q7_{rec} of the receiving unit 32 of the fourth ultrasonic machining device, assuming that the receiving unit 32 is reasonably designed: $Q {7}_{rec} = \left[\frac{2 \times f \times {N}_{rec}^{2} \times {I}_{rec}^{2}}{{R}_{δ} + {R}_{rec} + {R}_{tra}}\right]$

Based on the correction coefficient K₁, the setting range of Q7_{rec} is obtained, specifically, 0.5≤K₁≤1.5.

After the current is applied to the fourth ultrasonic machining device, the actual apparent power Q8ₜᵣₐ of the transmitting unit 31 during operation and the actual apparent power Q8_{rec} of the receiving unit 32 are measured, and after the fourth ultrasonic machining device operates for the preset time t, a temperature rise measurement result of the fourth ultrasonic machining device during operation for the preset time t is obtained. In this case, Q8ₜᵣₐ does not fall within the setting range of Q7ₜᵣₐ, and Q8_{rec} does not fall within the setting range of Q7_{rec}. Therefore, the structural parameters and performance of the transmitting unit 31 and the receiving unit 32 of the fourth ultrasonic machining device are not matched, and the design of the transmitting unit 31 and the receiving unit 32 of the fourth ultrasonic machining device is unreasonable.

The test method is as follows:
At an ambient temperature of 24°C, the air-gap width δ between the transmitting unit 31 and the receiving unit 32 of the third ultrasonic machining device is set to 0.3 mm, and the air-gap width δ between the transmitting unit 31 and the receiving unit 32 of the fourth ultrasonic machining device is set to 0.2 mm. The transmitting unit 31 of each of the third ultrasonic machining device and the fourth ultrasonic machining device is connected to an ultrasonic generator, while the receiving unit 32 thereof is connected to the ultrasonic transducer 2. The receiving unit 32 and the transmitting unit 31 are connected to a Yokogawa power oscilloscope to acquire the applied peak currents Iₜᵣₐ, I_{rec} and apparent powers Qₜᵣₐ, Q_{rec}. The frequency f of the electrical signal input to the receiving unit 32 is detected using a Tektronix oscilloscope.

**Table 3A**

| Third ultrasonic machining device | | | | |
|---|---|---|---|---|
| f=21800 Hz; R_{δ}=2685628 H⁻¹; R_{rec}=8320 H⁻¹; Rₜᵣₐ=41744 H⁻¹; δ=0.3 mm | | | | |
| Test ambient temperature: 24°C; Preset operating time t: 10 min | | | | |
| Transmitting unit | | | | |
| N=15 | | | | |
| Iₜᵣₐ (A) | Range of Q5ₜᵣₐ (VA) | Q6ₜᵣₐ (VA) | Temperature of transmitting unit (°C) | Amplitude (µm) |
| 3.27 | 21-55.6 | 38.3 | 23.0 | 7 |
| | | | 31.0 | |
| | | | 38.0 | |
| | | | 43.0 | |
| | | | 54.0 | |
| 2.4 | 11.4-30 | 20.6 | 23.0 | 4 |
| | | | 26.0 | |
| | | | 31.0 | |
| | | | 37.0 | |
| | | | 41.0 | |
| 1.57 | 4.9-12.8 | 8.8 | 22.9 | 1.5 |
| | | | 24.0 | |
| | | | 27.0 | |
| | | | 31.0 | |
| | | | 36.0 | |

**Table 3B**

| Third ultrasonic machining device | | | | |
|---|---|---|---|---|
| f=21800 Hz; R_{δ}=2685628 H⁻¹; R_{rec}=8320 H⁻¹; Rₜᵣₐ=41744 H⁻¹; δ=0.3 mm | | | | |
| Test ambient temperature: 24°C; Preset operating time t: 10 min | | | | |
| Receiving unit | | | | |
| N=65 | | | | |
| I_{rec} (A) | Range of Q5_{rec} (VA) | Q6_{rec} (VA) | Temperature of receiving unit (°C) | Amplitude (µm) |
| 0.94 | 32.7-86.3 | 59 | 23.0 | 7 |
| | | | 34.0 | |
| | | | 40.0 | |
| | | | 46.0 | |
| | | | 56.0 | |
| 0.77 | 22-57.9 | 40 | 23.0 | 4 |
| | | | 28.0 | |
| | | | 35.0 | |
| | | | 39.0 | |
| | | | 44.0 | |
| 0.52 | 10-26.4 | 18 | 22.9 | 1.5 |
| | | | 27.0 | |
| | | | 30.0 | |
| | | | 35.0 | |
| | | | 40.0 | |

**Table 4A**

| Fourth ultrasonic machining device | | | | |
|---|---|---|---|---|
| f=23000 Hz; R_{δ}=1896372 H⁻¹; R_{rec}=15413 H⁻¹; Rₜᵣₐ=61696 H⁻¹; δ=0.2 mm | | | | |
| Test ambient temperature: 24°C; Preset operating time t: 10 min | | | | |
| Transmitting unit | | | | |
| N=15 | | | | |
| Iₜᵣₐ (A) | Range of Q7ₜᵣₐ (VA) | Q8ₜᵣₐ (VA) | Temperature of transmitting unit (°C) | Amplitude (µm) |
| 1.978 | 11.3-29.7 | 39 | 21.5 | 1.4 |
| | | | 38.0 | |
| | | | 48.0 | |
| | | | 59.0 | |
| | | | 68.0 | |
| 1.47 | 6.2-16.4 | 21 | 21.0 | 0.8 |
| | | | 33.0 | |
| | | | 40.0 | |
| | | | 49.0 | |
| | | | 60.0 | |
| 0.95 | 2.6-6.8 | 8 | 22.5 | 0.3 |
| | | | 24.0 | |
| | | | 38.0 | |
| | | | 40.0 | |
| | | | 48.0 | |

**Table 4B**

| Fourth ultrasonic machining device | | | | |
|---|---|---|---|---|
| f=23000 Hz; R₃=1896372 H⁻¹; R_{rec}=15413 H⁻¹; Rₜᵣₐ=61696 H⁻¹; δ=0.2 mm | | | | |
| Test ambient temperature: 24°C; Preset operating time t: 10 min | | | | |
| Receiving unit | | | | |
| N=65 | | | | |
| I_{rec} (A) | Range of Q7_{rec} (VA) | Q8_{rec} (VA) | Temperature of receiving unit (°C) | Amplitude (µm) |
| 0.836 | 37.8-99.8 | 33 | 21.5 | 1.4 |
| | | | 37.0 | |
| | | | 47.0 | |
| | | | 60.0 | |
| | | | 70.0 | |
| 0.58 | 18.2-48 | 15 | 21.0 | 0.8 |
| | | | 36.0 | |
| | | | 44.0 | |
| | | | 51.0 | |
| | | | 61.0 | |
| 0.35 | 6.6-17.5 | 4 | 22.5 | 0.3 |
| | | | 27.0 | |
| | | | 40.0 | |
| | | | 43.0 | |
| | | | 50.0 | |

It should be noted that Table 3A and Table 3B show the temperature rise data of the receiving unit 32 and the transmitting unit 31, and the amplitude data generated by the attached machining tool 20 when different magnitudes of currents are applied and continuous operation lasts for a preset time of 10 min at the preset ambient temperature, for the third ultrasonic machining device designed in accordance with Eqs. (55) and (58) of the present disclosure. Table 4A and Table 4B show the temperature rise data of the receiving unit 32 and the transmitting unit 31, and the amplitude data generated by the attached machining tool 20 when different magnitudes of currents are applied and continuous operation lasts for a preset time of 10 min at the preset ambient temperature, for the fourth ultrasonic machining device not designed in accordance with Eqs. (55) and (58) of the present disclosure.

It can be seen from Table 3A and Table 3B that, by reasonably designing the ultrasonic machining device 10 based on the equations of the present disclosure, the structural parameters and performance of the transmitting unit 31 and the receiving unit 32 can be matched with the applied peak current and the apparent power. During operation, the temperature rise of the wireless transmission mechanism 3 is reduced, and the wireless transmission efficiency and continuous operation stability of the device are improved. Furthermore, when the structural parameters and performance of the transmitting unit 31 and the receiving unit 32 are matched with the applied peak current and the apparent power, more energy of the ultrasonic machining device 10 can be effectively converted into useful work. During operation with different apparent powers, after the machining tool 20 is mounted, the increase in the amplitude generated at the machining end of the machining tool 20 can be substantially the same as the increase in the apparent power of the first ultrasonic machining device, thereby maintaining high energy conversion efficiency.

It can be seen from Table 4A and Table 4B that the temperature rise of the fourth ultrasonic machining device in Table 4A and Table 4B is significantly higher than that of the third ultrasonic machining device in Table 3A and Table 3B. Moreover, when the machining tool 20 is mounted on the fourth ultrasonic machining device, the increase in the amplitude at the machining end of the machining tool 20 differs greatly from the increase in the apparent power of the fourth ultrasonic machining device, resulting in a small change in amplitude while the apparent power increases, and low energy conversion efficiency. That is, the structural parameters and performance of the transmitting unit 31 and the receiving unit 32 of the fourth ultrasonic machining device are not matched, and therefore the design of the transmitting unit 31 and the receiving unit 32 is unreasonable. During operation of such a fourth ultrasonic machining device, a higher proportion of the energy of the wireless transmission mechanism 3 is dissipated as heat, causing the temperature rise rate of such a fourth ultrasonic machining device to be significantly higher than that of the third ultrasonic machining device shown in Table 3A and Table 3B. Moreover, the increase in the amplitude at the machining end of the machining tool 20 of such a fourth ultrasonic machining device differs greatly from the increase in the apparent power, resulting in that the amplitude of the machining tool 20 lags behind and changes only slightly when the apparent power of such a fourth ultrasonic machining device increases, and the overall effective energy conversion efficiency of the wireless transmission mechanism 3 is relatively low.

It should be noted that the apparent powers Q6ₜᵣₐ, Q6_{rec}, Q8ₜᵣₐ, and Q8_{rec}, as well as the peak currents Iₜᵣₐ and I_{rec} of the third ultrasonic machining device and the fourth ultrasonic machining device are all measured by a Yokogawa power oscilloscope (model: PX8000). Specifically, Embodiment 2 provides a measurement method as follows:

The CH1 voltage probe of the Yokogawa power oscilloscope is connected to positive and negative terminals of the transmitting unit 31, and the CH1 current probe is connected to the transmitting unit 31. The current direction of the CH1 current probe is set to flow from the positive terminal to the negative terminal.

The CH2 voltage probe of the Yokogawa power oscilloscope is connected to positive and negative terminals of the receiving unit 32, and the CH2 current probe is connected to the receiving unit 32. The current direction of the CH2 current probe is set to flow from the positive terminal to the negative terminal.

The ELEM1 button is pressed to activate the CH1 measurement channel. The U1 button is pressed, and voltage measurement is selected. The I1 button is pressed, and current measurement is selected. The P1 button is pressed, and power measurement is selected.

The ELEM2 button is pressed to activate the CH2 measurement channel. The U2 button is pressed, and voltage measurement is selected. The I2 button is pressed, and current measurement is selected. The P2 button is pressed, and power measurement is selected.

The "MODE" button is pressed, and the "Numeric+Wave" mode is selected in the "DISPLAY MODE" menu. The "SETTING" button is pressed, and in the "NUMERIC SETTING" menu, "Format" is set to "16Items".

The "START/STOP" button is pressed to start the test. The apparent powers and the peak currents of the transmitting unit 31 and the receiving unit 32 are acquired from the data displayed on the screen, where I+pk1 denotes the CH1 current peak, i.e., the peak current applied to the transmitting unit 31; S₁ denotes the CH1 apparent power, i.e., the apparent power of the transmitting unit 31; I+pk2 denotes the CH2 current peak, i.e., the peak current applied to the receiving unit 32; and S₂ denotes the CH2 apparent power, i.e., the apparent power of the receiving unit 32.

In addition, in the first ultrasonic machining device and the second ultrasonic machining device, the frequency f of the electrical signal input to the receiving unit 32 is measured by a Tektronix oscilloscope (model: MDO3024). Specifically, Embodiment 2 provides a measurement method as follows:

The differential probe is inserted into the CH1 port and connected to the positive and negative terminals of the receiving unit 32.

"Menu" is opened, "Edge" is selected under "Type", "1" is selected under "Source", "AC" is selected under "Coupling", "Rising Edge" is selected under "Slope", "Level" is set to "0 V", and "Auto" is selected under "Mode".

The button "1" is pressed to activate a CH1 measurement channel, and AC coupling mode is selected from the options that pop up at the bottom of the screen. The "Measure" button in the Wave Inspector button area is pressed, "Add Measurement" is selected from the options that pop up at the bottom of the screen, "1" is selected under "Source", "Frequency" is selected under "Measurement Type", and then "OK Add Measurement" is selected.

The "Run/Stop" button is pressed to start the test. After the frequency sweep of the ultrasonic power supply is completed, the measured frequency on the screen is read and recorded, and this frequency is the frequency f of the electrical signal input to the receiving unit 32.

It should be noted that in this embodiment, the transmitting ferrite 312 and the receiving ferrite 322 of each of the third ultrasonic machining device and the fourth ultrasonic machining device are made of manganese-zinc ferrite material, with a relative permeability u of 2500. The apparent powers Q6ₜᵣₐ, Q6_{rec}, and Q8ₜᵣₐ, Q8_{rec}, as well as peak currents Iₜᵣₐ and I_{rec} in the third ultrasonic machining device and the fourth ultrasonic machining device are all measured by a Yokogawa power oscilloscope (model: PX8000). The frequency f of the electrical signal input to the receiving unit 32 in the third ultrasonic machining device and the fourth ultrasonic machining device is measured by a Tektronix oscilloscope (model: MDO3024).

In addition, the machining tool assembled in the third ultrasonic machining device and the fourth ultrasonic machining device in this embodiment is a D6 flat-end mill with an overhang length of 20 mm. In different tests, different machining tools and corresponding overhang lengths may also be employed, such as a D₄ tungsten steel rod with an overhang length of 20 mm, or a D₁6 flat-end mill with an overhang length of 50 mm.

Specifically, in this embodiment, a bracket 112 is provided, and a transmitting mount 33 is mounted on the first rotary output unit 110 via the bracket 112.

### Embodiment 3

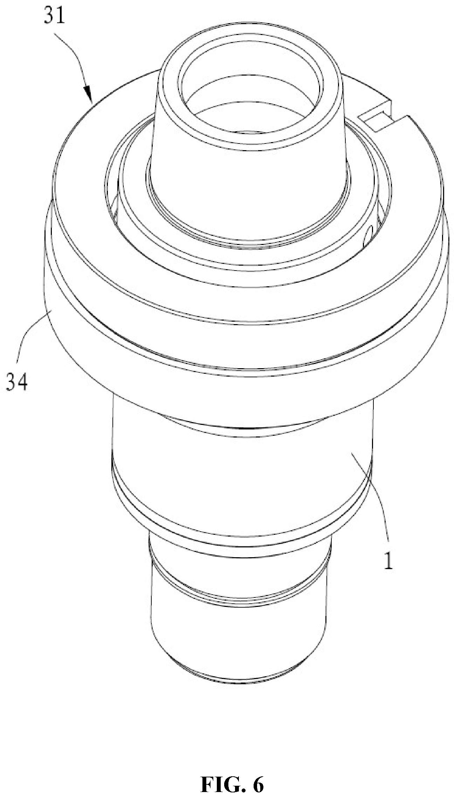

Referring to FIGS. 1 to 16, based on the ultrasonic machining device 10 of Embodiment 1 or Embodiment 2, this embodiment provides an ultrasonic spindle 100, which specifically includes a first rotary output unit 110, a machining tool 20, and the ultrasonic machining device 10 of Embodiment 1 or Embodiment 2.

Specifically, referring to FIGS. 1 to 8, this embodiment is based on the ultrasonic machining device 10 of Embodiment 1. The ultrasonic machining device 10 further includes a transmitting mount 33 and a receiving mount 34. The transmitting mount 33 and the receiving mount 34 are arranged opposite each other along the axial direction of the tool body 1. An end surface of the transmitting mount 33 facing the receiving mount 34 is provided with the first accommodating groove 331, and an end surface of the receiving mount 34 facing the transmitting mount 33 is provided with the second accommodating groove 341. The receiving unit 32 is accommodated in the second accommodating groove 341, and the transmitting unit 31 is accommodated in the first accommodating groove 331.

Referring to FIGS. 1 to 3, in this embodiment, the end cover 111 of the first rotary output unit 110 serves as the transmitting mount 33, and the transmitting unit 31 is disposed in the first accommodating groove 331 provided in the front end surface of the end cover 111. In other embodiments, a bracket may be used to externally mount the transmitting unit 31 to other equipment, and the transmitting mount 33 is connected to the bracket, and may be integrally formed with the bracket or detachably connected thereto. The specific assembly structure will not be described again here.

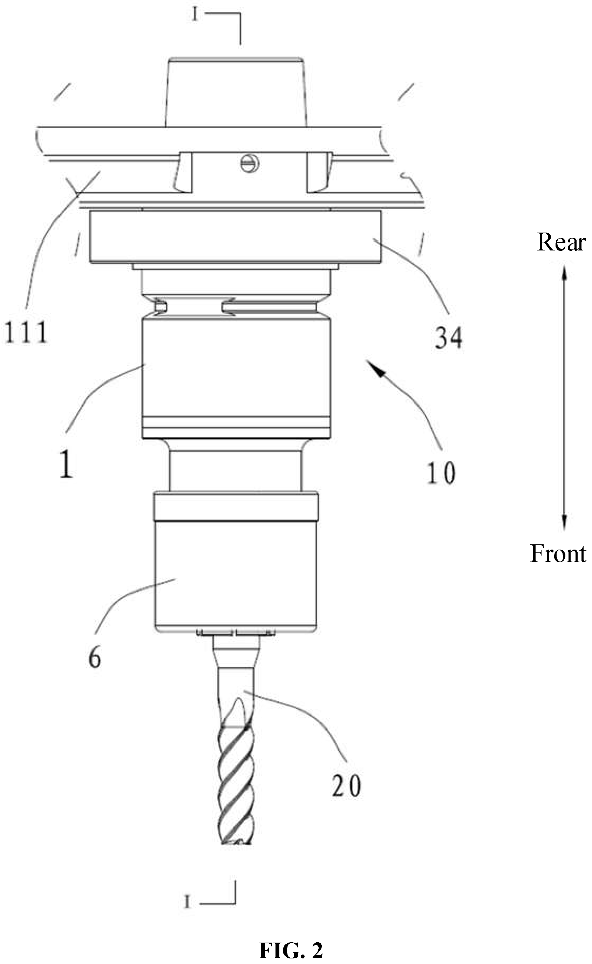

Specifically, referring to FIGS. 1 and 2, the rear end of the tool body 1 in this embodiment is configured to be connected to the first rotary output unit 110, and the front end thereof is provided with a mounting cavity 11 configured to accommodate the ultrasonic transducer 2. The ultrasonic transducer 2 is disposed in the mounting cavity 11, and is electrically connected to the receiving unit 32.

Furthermore, referring to FIG. 3, in order to improve the mounting reliability between the tool body 1 and the receiving mount 34, an outer peripheral surface of the tool body 1 in this embodiment is provided with a limiting collar 12 protruding along a radial direction of the tool body. When the receiving mount 34 is sleeved on the outer periphery of the tool body 1, the relative position between the receiving mount 34 and the tool body 1 during assembly is determined by abutting the receiving mount 34 against the rear end surface of the limiting collar 12. Thus, the weight distribution of the tool body 1 with the receiving mount 34 mounted thereon in the axial direction meets the design specifications, thereby improving the operation stability of the ultrasonic machining device 10 during machining. Preferably, the receiving mount 34 in this embodiment is welded and fixed to the tool body 1.

The ultrasonic transducer 2 in this embodiment includes a piezoelectric vibrator 21, a screw rod 22, and a rear cover 23. The ultrasonic machining device 10 of this embodiment further includes a horn 24. The screw rod 22 is disposed in the mounting cavity 11, and extends along the axial direction of the tool body 1. A rear end of the horn 24 extends into the mounting cavity 11, and is fixedly connected to the screw rod 22. The piezoelectric vibrator 21 is sleeved on an outer peripheral side of the screw rod 22. A rear end surface of the horn 24 protrudes outward beyond an outer peripheral surface of the screw rod 22 along a radial direction of the screw rod 22 to form an abutment surface. Thus, when the rear cover 23 is threaded onto the screw rod 22 from the rear end of the screw rod 22 and threadedly connected to the screw rod 22, it can cooperate with the abutment surface to define the position of the piezoelectric vibrator 21 relative to the screw rod 22.

Preferably, the horn 24 and the screw rod 22 in this embodiment are integrally formed, thereby improving the overall strength of the horn 24 and the screw rod 22, enabling stable output of vibration at a preset frequency for a longer time under the action of the piezoelectric vibrator 21.

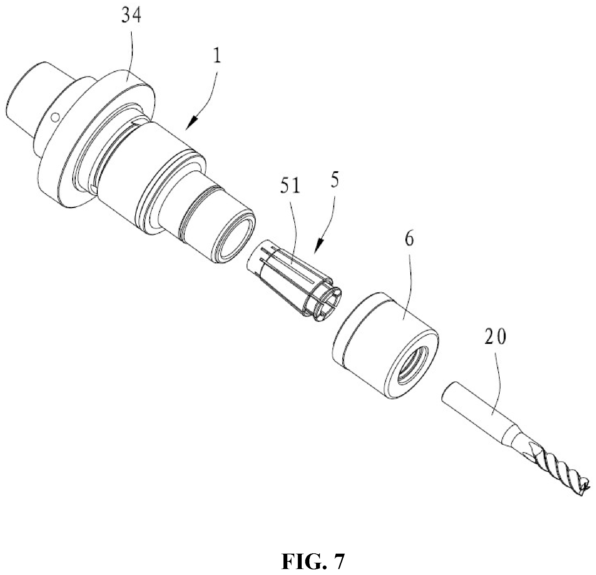

Referring to FIGS. 3 and 7, in order to fix the machining tool 20 to the horn 24, the ultrasonic machining device 10 of this embodiment further includes a collet 5 and a nut 6. A front end of the horn 24 is provided with an insertion bore 241 extending rearward. The collet 5 can be sleeved on the outer periphery of the machining tool 20 and inserted together with the machining tool 20 into the insertion bore 241. Specifically, an inner peripheral surface of the insertion bore 241 in this embodiment is tapered with a diameter gradually decreasing from front to rear. The collet 5 is provided with a conical section 51 matching the tapered insertion bore 241. When the collet 5 and the machining tool 20 are inserted into the insertion bore 241, the inner peripheral surface of the insertion bore 241 can abut against the collet 5, causing the collet 5 to deform and clamp the machining tool 20. Furthermore, in order to fix the machining tool 20 relative to the horn 24 when inserted into a preset position of the insertion bore 241, the nut 6 is sleeved on an outer periphery of the collet 5, and the nut 6 is threadedly connected to the horn 24. Thus, the nut 6 can abut against a front end of the collet 5 to prevent the collet 5 from moving forward, such that the machining tool 20 is stably assembled to the horn 24.

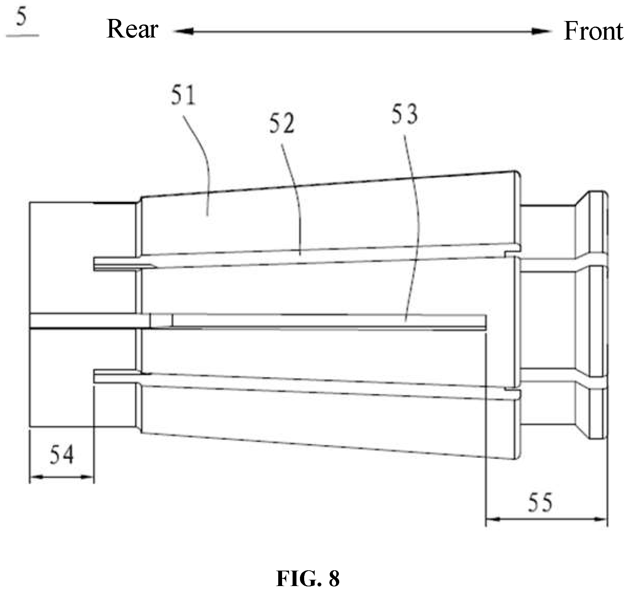

Furthermore, referring to FIG. 8, the collet 5 in this embodiment includes the conical section 51 cooperating with the insertion bore. The collet 5 is provided with a plurality of first deformation grooves 52 arranged at intervals along its circumferential direction. Specifically, the plurality of first deformation grooves 52 are uniformly distributed along the circumferential direction of the collet 5, such that their deformation is uniformly distributed along the circumferential direction. The plurality of first deformation grooves 52 extend to or through the conical section 51. Thus, when the collet 5 is pushed into the insertion bore 241, a certain amount of deformation is generated via the plurality of first deformation grooves 52, thereby deforming and clamping the machining tool. Meanwhile, by virtue of the inherent elastic properties of the material, the collet can be elastically restored after being disassembled from the horn 24 for repeated use.

The plurality of first deformation grooves 52 penetrate through an outer side surface and an inner side surface of the collet 5. The plurality of first deformation grooves 52 extend rearward from a front end surface of the collet 5 along the axial direction of the collet 5, pass through the conical section 51, and extend toward a rear end surface of the collet 5. A first gap 54 is provided between a rear groove surface of each of the plurality of first deformation grooves 52 and the rear end surface of the collet 5. Specifically, a width of the first gap 54 is greater than zero, such that the collet 5 has sufficient deformation capability while maintaining sufficient strength for clamping the machining tool 20.

Furthermore, the collet 5 is provided with a plurality of second deformation grooves 53 arranged at intervals along its circumferential direction. The plurality of second deformation grooves 53 extend to or through the conical section 51. The plurality of second deformation grooves 53 are spaced from and staggered with the plurality of first deformation grooves 52. Specifically, one second deformation groove 53 is disposed between every two adjacent first deformation grooves 52, such that the collet 5 is uniformly stressed during deformation.

In this embodiment, a second gap 55 is provided between a front groove surface of each of the plurality of second deformation grooves 53 and the front end surface of the collet 5. The plurality of second deformation grooves 53 extend and penetrate through the rear end surface of the collet 5. A width of the second gap 55 is greater than zero.

Specifically, in different embodiments, the machining tool 20 may be a cutter head, an end mill, a grinding tool, or other tools.

Based on the above ultrasonic spindle 100, an embodiment of the present disclosure further provides an ultrasonic machine tool, including a machine tool body (not shown in the figures) and the above ultrasonic spindle 100. The ultrasonic spindle 100 is mounted on the machine tool body.

### Embodiment 4

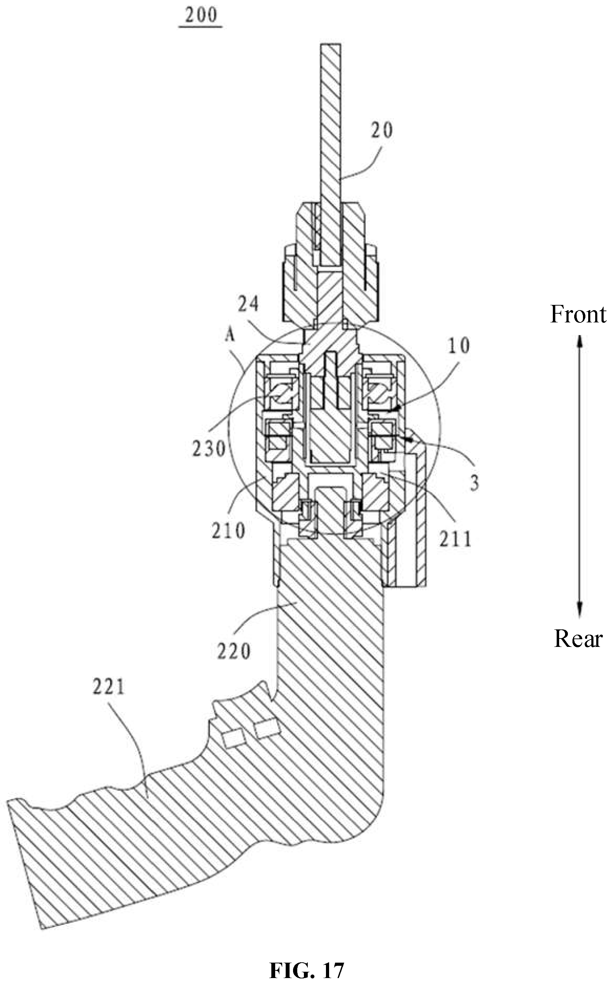

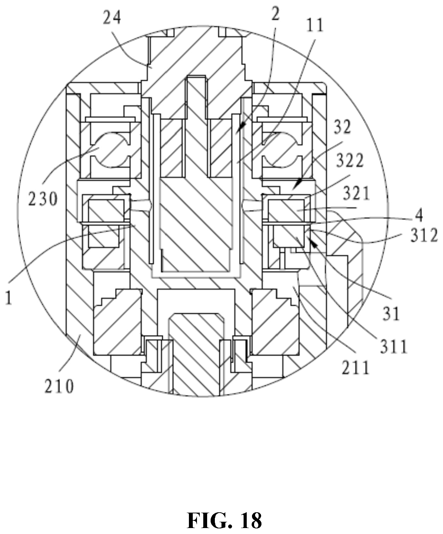

Referring to FIGS. 17 and 18, this embodiment is based on the ultrasonic machining device 10 of Embodiment 1 or Embodiment 2. The ultrasonic machining device 10 includes a tool body 1, an ultrasonic transducer 2, and a wireless transmission mechanism 3. The rear end of the tool body 1 is assembled to a rotary output device and rotates synchronously with the rotary output device.

Specifically, this embodiment is based on the ultrasonic machining device 10 of Embodiment 1 above. The wireless transmission mechanism 3 is disposed around the outer peripheral side of the tool body 1. Specifically, referring to FIGS. 17 and 18, the wireless transmission mechanism 3 in this embodiment includes a transmitting unit 31 and a receiving unit 32. The transmitting unit 31 is disposed on the outer peripheral side of the tool body 1, and the receiving unit 32 is disposed on the outer peripheral side of the tool body 1. The transmitting unit 31 and the receiving unit 32 are arranged opposite each other along the axial direction of the tool body 1 and form an air gap 4. The transmitting unit 31 includes a transmitting coil 311 and a transmitting ferrite 312, and the receiving unit 32 includes a receiving coil 321 and a receiving ferrite 322.

Specifically, the transmitting unit 31 is in the form of a full ring or a partial ring disposed around the outer periphery of the tool body 1. It can be understood that the transmitting unit 31 extends around the outer periphery of the tool body 1 by an angle of 0, $\frac{π}{4} \leq θ \leq 2 π$. Preferably, $θ = \frac{π}{2}$, θ = π, θ = 2π. Specifically, θ is a central angle corresponding to the circumferential extension of the transmitting ferrite 312 along the tool body 1.

Referring to FIGS. 17 and 18, specifically, this embodiment provides an ultrasonic drill 200, including a housing 210, a second rotary output unit 220, a machining tool 20, a bearing 230, and the above ultrasonic machining device 10. The second rotary output unit 220 serves as the rotary output device, and is connected to the rear end of the tool body 1 to output torque. The front end surface of the housing 210 is provided with an accommodating cavity 211 extending rearward. The rear end of the tool body 1 is accommodated in the accommodating cavity 211, and is connected to the output end of the second rotary output unit 220. The tool body 1 is connected to the housing 210 via the bearing 230. The transmitting unit 31 is disposed in the accommodating cavity 211, and is connected to the housing 210. The receiving unit 32 is disposed in the accommodating cavity 211, fixed to the tool body 1, and opposite to the transmitting unit 31. Specifically, the machining tool 20 is connected to the ultrasonic transducer 2 via the horn 24.

Specifically, in this embodiment, the second rotary output unit 220 further includes a grip handle 221 formed by an extension, and the housing 210 is fixedly connected to the second rotary output unit 220, such that the relative position between the ultrasonic machining device 10 and the second rotary output unit 220 is stable.

The specification discloses the present disclosure with the drawings, and also enables those skilled in the art to practice the present disclosure, including making and using any devices or systems, using appropriate materials and performing any incorporated methods. The scope of the present disclosure is defined by the claimed technical solutions, and includes other embodiments that would occur to those skilled in the art. Such other embodiments shall be deemed to fall within the scope of protection defined by the technical solution claimed in the present disclosure, provided that they include structural elements that are not different from the literal language of the claimed technical solution, or that they contain equivalent structural elements that have no substantial difference from the literal language of the claimed technical solution.

## Claims

1. An axial-opposed-ring ultrasonic machining device, comprising:
a tool body, wherein the tool body comprises a rear end configured to be connected to a rotary output device and a front end provided with a mounting cavity;
a wireless transmission mechanism, wherein the wireless transmission mechanism comprises a transmitting unit and a receiving unit; the transmitting unit is disposed on an outer peripheral side of the tool body, and the receiving unit is disposed on the outer peripheral side of the tool body; the transmitting unit and the receiving unit are arranged opposite each other along an axial direction of the tool body and form an air gap; the transmitting unit comprises a transmitting coil and a transmitting magnet configured to generate a magnetic field based on a current in the transmitting coil; and the receiving unit comprises a receiving coil and a receiving magnet configured to receive the magnetic field generated by the transmitting unit; and
an ultrasonic transducer, wherein the ultrasonic transducer is disposed in the mounting cavity and electrically connected to the receiving unit;
wherein, a frequency of an electrical signal input to the receiving unit is f Hz, an air-gap reluctance of the wireless transmission mechanism is R_{δ} H⁻¹, a reluctance of the transmitting unit is Rₜᵣₐ H⁻¹, and a reluctance of the receiving unit is R_{rec} H⁻¹;
an apparent power of the transmitting unit is Qₜᵣₐ VA, a peak current applied to the transmitting unit is Iₜᵣₐ A, and a number of turns of the transmitting coil is Nₜᵣₐ; and a following equation holds: ${Q}_{tra} = \left[\frac{2 \times f \times {N}_{tra}^{2} \times {I}_{tra}^{2}}{{R}_{δ} + {R}_{rec} + {R}_{tra}}\right] \times {K}_{1}$
a number of turns of the receiving coil is N_{rec}, an apparent power of the receiving unit is Q_{rec} VA, and a peak current applied to the receiving unit is I_{rec} A; and a following equation holds: ${Q}_{rec} = \left[\frac{2 \times f \times {N}_{rec}^{2} \times {I}_{rec}^{2}}{{R}_{δ} + {R}_{rec} + {R}_{tra}}\right] \times {K}_{1}$
wherein, K₁ is a correction coefficient, 0.5≤K₁≤1.5, and the number of turns satisfies: 2≤N_{rec}≤240 and 2≤Nₜᵣₐ≤240.

2. The axial-opposed-ring ultrasonic machining device according to claim 1, wherein the transmitting unit extends around the outer peripheral side of the tool body by an angle of θ, $\frac{π}{4} \leq θ \leq 2 π$ .

3. The axial-opposed-ring ultrasonic machining device according to claim 2, wherein θ=2π; the transmitting magnet comprises a first annular base plate, a first annular inner side plate, and a first annular outer side plate; the first annular inner side plate is connected to an inner side of the first annular base plate, and the first annular outer side plate is connected to an outer side of the first annular base plate; the first annular base plate, the first annular inner side plate, and the first annular outer side plate form a first coil embedding groove with an opening facing the receiving unit; the transmitting coil is disposed around the first annular inner side plate along a circumferential direction of the tool body, and is accommodated in the first coil embedding groove; and a thickness of the first annular base plate is H₃ mm, a thickness of the first annular inner side plate is b₃ mm, a thickness of the first annular outer side plate is b₄ mm, the transmitting magnet has a length of H₄ mm in the axial direction of the tool body, an inner diameter of the first annular inner side plate is D₃ mm, and an outer diameter of the first annular outer side plate is D₄ mm;
the receiving magnet comprises a second annular base plate, a second annular inner side plate, and a second annular outer side plate; the second annular inner side plate is connected to an inner side of the second annular base plate, and the second annular outer side plate is connected to an outer side of the second annular base plate; the second annular base plate, the second annular inner side plate, and the second annular outer side plate form a second coil embedding groove with an opening facing the transmitting unit; the receiving coil is disposed around the second annular inner side plate along the circumferential direction of the tool body, and is accommodated in the second coil embedding groove; and a thickness of the second annular base plate is H₁ mm, a thickness of the second annular inner side plate is b₁ mm, a thickness of the second annular outer side plate is b₂ mm, the receiving magnet has a length of H₂ mm in the axial direction of the tool body , an inner diameter of the second annular inner side plate is D₁ mm, and an outer diameter of the second annular outer side plate is D₂ mm;
a relative permeability of each of the transmitting magnet and the receiving magnet is u, with a vacuum permeability being u₀ H/m, a magnetic-circuit area of the second annular inner side plate is S₁, and a magnetic-circuit area of the second annular outer side plate is S₂; and S₁ and S₂ are respectively expressed as follows: ${S}_{1} = π \left[{\left(\frac{{D}_{1}}{2}+{b}_{1}\right)}^{2}-{\left(\frac{{D}_{1}}{2}\right)}^{2}\right]$ ${S}_{2} = π \left[{\left(\frac{{D}_{2}}{2}\right)}^{2}-{\left(\frac{{D}_{2}}{2}-{b}_{2}\right)}^{2}\right]$
a reluctance of the second annular inner side plate is R₁, a reluctance of the second annular outer side plate is R₂, and a reluctance of the second annular base plate is R₃; and the reluctance R_{rec} of the receiving unit is expressed as follows: ${R}_{1} = \frac{{H}_{2} - {H}_{1}}{{S}_{1} \times u \times {u}_{0}} \times 1000$ ${R}_{2} = \frac{{H}_{2} - {H}_{1}}{{S}_{2} \times u \times {u}_{0}} \times 1000$ ${R}_{3} = \frac{ln \left(\frac{{D}_{2}}{{D}_{1}}\right)}{π \times 2 {H}_{1} \times u \times {u}_{0}} \times 1000$ ${R}_{rec} = {R}_{1} + {R}_{2} + {R}_{3}$
a magnetic-circuit area of the first annular inner side plate is S₃, and a magnetic-circuit area of the first annular outer side plate is S₄; and S₃ and S₄ are respectively expressed as follows: ${S}_{3} = π \left[{\left(\frac{{D}_{3}}{2}+{b}_{3}\right)}^{2}-{\left(\frac{{D}_{3}}{2}\right)}^{2}\right]$ ${S}_{4} = π \left[{\left(\frac{{D}_{4}}{2}\right)}^{2}-{\left(\frac{{D}_{4}}{2}-{b}_{4}\right)}^{2}\right]$
a reluctance of the first annular inner side plate is R₄, a reluctance of the first annular outer side plate is R₅, and a reluctance of the first annular base plate is R₆; and the reluctance Rₜᵣₐ of the transmitting unit is expressed as follows: ${R}_{4} = \frac{{H}_{4} - {H}_{3}}{{S}_{3} \times u \times {u}_{0}} \times 1000$ ${R}_{5} = \frac{{H}_{4} - {H}_{3}}{{S}_{4} \times u \times {u}_{0}} \times 1000$ ${R}_{6} = \frac{ln \left(\frac{{D}_{4}}{{D}_{3}}\right)}{π \times 2 {H}_{3} \times u \times {u}_{0}} \times 1000$ ${R}_{tra} = {R}_{4} + {R}_{5} + {R}_{6} .$

4. The axial-opposed-ring ultrasonic machining device according to claim 3, wherein an equivalent air-gap magnetic-circuit area between the second annular inner side plate and the first annular inner side plate is S_{δ1}, an equivalent air-gap magnetic-circuit area between the second annular outer side plate and the first annular outer side plate is S_{δ2}, an air-gap reluctance between the second annular inner side plate and the first annular inner side plate is R_{δ1}, an air-gap reluctance between the second annular outer side plate and the first annular outer side plate is R_{δ2}, F₁, F₂, F₃, and F₄ are fringing flux coefficients, and an air-gap width is δ mm;
in response to that b₁=b₃, then: ${S}_{δ 1} = π \left[{\left(\frac{{D}_{3}}{2}+{b}_{3}\right)}^{2}-{\left(\frac{{D}_{3}}{2}\right)}^{2}\right]$ ${F}_{1} = 1 + \frac{δ}{\sqrt{{10}^{- 3} \times {S}_{δ 1}}} \times ln \left[\frac{{10}^{5} \times 2 \times \left({H}_{2}-{H}_{1}+{H}_{4}-{H}_{3}+δ\right)}{δ}\right]$ ${R}_{δ 1} = \frac{16}{{F}_{1}} \times δ \times \left(\frac{1}{{u}_{0} \times {S}_{δ 1}}\right) \times 1000$
in response to that b₂=b₄, then: ${S}_{δ 2} = π \left[{\left(\frac{{D}_{4}}{2}\right)}^{2}-{\left(\frac{{D}_{4} - 2 {b}_{4}}{2}\right)}^{2}\right]$ ${F}_{2} = 1 + \frac{δ}{\sqrt{{10}^{- 3} \times {S}_{δ 2}}} \times ln \left[\frac{{10}^{5} \times 2 \times \left({H}_{2}-{H}_{1}+{H}_{4}-{H}_{3}+δ\right)}{δ}\right]$ ${R}_{δ 2} = \frac{16}{{F}_{2}} \times δ \times \left(\frac{1}{{u}_{0} \times {S}_{δ 2}}\right) \times 1000$
in response to that b₁>b₃, then w₁=b₁, w₂=b₃, and D=D₃; in response to that b₃>b₁, then w₁=b₃, w₂=b₁, and D=D₁; and thus: ${F}_{3} = 1 + \frac{δ}{\sqrt{{10}^{- 3} \times π \left[{\left(\frac{D}{2}+{w}_{2}\right)}^{2}-{\left(\frac{D}{2}\right)}^{2}\right]}} \times ln \left[\frac{{10}^{5} \times 2 \times \left({H}_{2}-{H}_{1}+{H}_{4}-{H}_{3}+δ\right)}{δ}\right] {R}_{δ 1} = \frac{16}{{F}_{3}} \times \frac{1}{{u}_{0} \times π} \times \frac{1}{2 \times \frac{\left(\frac{{w}_{1} - {w}_{2}}{2}\right)}{δ} \times \left(\frac{D + {w}_{2}}{1000}\right)} \times ln \left[\frac{{\left(\frac{D}{2}+{w}_{2}\right)}^{2} - {\left(\frac{D}{2}\right)}^{2} + 2 \times \frac{\left(\frac{{w}_{1} - {w}_{2}}{2}\right)}{δ} \times \left(D+{w}_{2}\right) \times δ}{{\left(\frac{D}{2}+{w}_{2}\right)}^{2} - {\left(\frac{D}{2}\right)}^{2}}\right]$
in response to that b₂>b₄, then w₁=b₂, w₂=b₄, and D=D₄; in response to that b₄>b₂, then w₁=b₄, w₂=b₂, and D=D₂; and thus: ${F}_{4} = 1 + \frac{δ}{\sqrt{{10}^{- 3} \times π \left[{\left(\frac{D}{2}\right)}^{2}-{\left(\frac{D}{2}-{w}_{2}\right)}^{2}\right]}} \times ln \left[\frac{{10}^{5} \times 2 \times \left({H}_{2}-{H}_{1}+{H}_{4}-{H}_{3}+δ\right)}{δ}\right]$ ${R}_{δ 2} = \frac{16}{{F}_{4}} \times \frac{1}{{u}_{0} \times π} \times \frac{1}{2 \times \frac{\left(\frac{{w}_{1} - {w}_{2}}{2}\right)}{δ} \times \left(\frac{D - {w}_{2}}{1000}\right)} \times ln \left[\frac{{\left(\frac{D}{2}\right)}^{2} - {\left(\frac{D}{2}-{w}_{2}\right)}^{2} + 2 \times \frac{\left(\frac{{w}_{1} - {w}_{2}}{2}\right)}{δ} \times \left(D-{w}_{2}\right) \times δ}{{\left(\frac{D}{2}\right)}^{2} - {\left(\frac{D}{2}-{w}_{2}\right)}^{2}}\right]$ ${R}_{δ} = {K}_{2} \times \left({R}_{δ 1}+{R}_{δ 2}\right)$
wherein, K₂ is a reluctance correction coefficient, 0.2≤K₂≤3.

5. The axial-opposed-ring ultrasonic machining device according to claim 2, wherein $\frac{π}{4} \leq θ < 2 π$ ; the transmitting magnet comprises an arc-shaped base plate, an arc-shaped inner side plate, and an arc-shaped outer side plate; the arc-shaped inner side plate is connected to an inner side of the arc-shaped base plate, and the arc-shaped outer side plate is connected to an outer side of the arc-shaped base plate; the arc-shaped base plate, the arc-shaped inner side plate, and the arc-shaped outer side plate are concentrically arranged; the arc-shaped base plate, the arc-shaped inner side plate, and the arc-shaped outer side plate form a first coil embedding groove with an opening facing the receiving unit; a thickness of the arc-shaped base plate is H₃ mm, a thickness of the arc-shaped inner side plate is b₃ mm, a thickness of the arc-shaped outer side plate is b₄ mm, the transmitting magnet has a length of H₄ mm in the axial direction of the tool body, an inner diameter of the arc-shaped inner side plate is D₃ mm, and an outer diameter of the arc-shaped outer side plate is D₄ mm; and the transmitting coil is disposed around the arc-shaped base plate or the arc-shaped outer side plate along a circumferential direction of the tool body;
the receiving magnet comprises a second annular base plate, a second annular inner side plate, and a second annular outer side plate; the second annular inner side plate is connected to an inner side of the second annular base plate, and the second annular outer side plate is connected to an outer side of the second annular base plate; the second annular base plate, the second annular inner side plate, and the second annular outer side plate form a second coil embedding groove with an opening facing the transmitting unit; a thickness of the second annular base plate is H₁ mm, a thickness of the second annular inner side plate is b₁ mm, a thickness of the second annular outer side plate is b₂ mm, the receiving magnet has a length of H₂ mm in the axial direction of the tool body, an inner diameter of the second annular inner side plate is D₁ mm, and an outer diameter of the second annular outer side plate is D₂ mm; and the receiving coil is disposed around the second annular inner side plate along the circumferential direction of the tool body;
a relative permeability of each of the transmitting magnet and the receiving magnet is u, with a vacuum permeability being u₀ H/m, a magnetic-circuit area of the second annular inner side plate is S₁, and a magnetic-circuit area of the second annular outer side plate is S₂; and S₁ and S₂ are respectively expressed as follows: ${S}_{1} = \frac{θ}{2} \left[{\left(\frac{{D}_{1}}{2}+{b}_{1}\right)}^{2}-{\left(\frac{{D}_{1}}{2}\right)}^{2}\right]$ ${S}_{2} = \frac{θ}{2} \left[{\left(\frac{{D}_{2}}{2}\right)}^{2}-{\left(\frac{{D}_{2}}{2}-{b}_{2}\right)}^{2}\right]$
a reluctance of the second annular inner side plate is R₁, a reluctance of the second annular outer side plate is R₂, and a reluctance of the second annular base plate is R₃; and the reluctance R_{rec} of the receiving unit is expressed by the above parameters: ${R}_{1} = \frac{{H}_{2} - {H}_{1}}{{S}_{1} \times u \times {u}_{0}} \times 1000$ ${R}_{2} = \frac{{H}_{2} - {H}_{1}}{{S}_{2} \times u \times {u}_{0}} \times 1000$ ${R}_{3} = \frac{ln \left(\frac{{D}_{2}}{{D}_{1}}\right)}{\frac{θ}{2} \times 2 {H}_{1} \times u \times {u}_{0}} \times 1000$ ${R}_{rec} = {R}_{1} + {R}_{2} + {R}_{3}$
a magnetic-circuit area of the arc-shaped inner side plate is S₃, and a magnetic-circuit area of the arc-shaped outer side plate is S₄; and S₃ and S₄ are respectively expressed as follows: ${S}_{3} = \frac{θ}{2} \left[{\left(\frac{{D}_{3}}{2}+{b}_{3}\right)}^{2}-{\left(\frac{{D}_{3}}{2}\right)}^{2}\right]$ ${S}_{4} = \frac{θ}{2} \left[{\left(\frac{{D}_{4}}{2}\right)}^{2}-{\left(\frac{{D}_{4}}{2}-{b}_{4}\right)}^{2}\right]$
a reluctance of the first annular inner side plate is R₄, a reluctance of the first annular outer side plate is R₅, and a reluctance of the first annular base plate is R₆; and the reluctance Rₜᵣₐ of the transmitting unit is expressed by the above parameters: ${R}_{4} = \frac{{H}_{4} - {H}_{3}}{{S}_{3} \times u \times {u}_{0}} \times 1000$ ${R}_{5} = \frac{{H}_{4} - {H}_{3}}{{S}_{4} \times u \times {u}_{0}} \times 1000$ ${R}_{6} = \frac{ln \left(\frac{{D}_{4}}{{D}_{3}}\right)}{\frac{θ}{2} \times 2 {H}_{3} \times u \times {u}_{0}} \times 1000$ ${R}_{tra} = {R}_{4} + {R}_{5} + {R}_{6} .$

6. The axial-opposed-ring ultrasonic machining device according to claim 5, wherein an equivalent air-gap magnetic-circuit area between the second annular inner side plate and the arc-shaped inner side plate is S_{δ1}, an equivalent air-gap magnetic-circuit area between the second annular outer side plate and the arc-shaped outer side plate is S_{δ2}, an air-gap reluctance between the second annular inner side plate and the arc-shaped inner side plate is R_{δ1}, an air-gap reluctance between the second annular outer side plate and the arc-shaped outer side plate is R_{δ2}, F₁, F₂, F₃, and F₄ are fringing flux coefficients, and an air-gap width is δ mm;
in response to that b₁=b₃, then: ${S}_{δ 1} = \frac{θ}{2} \left[{\left(\frac{{D}_{3}}{2}+{b}_{3}\right)}^{2}-{\left(\frac{{D}_{3}}{2}\right)}^{2}\right]$ ${F}_{1} = 1 + \frac{δ}{\sqrt{{10}^{- 3} \times {S}_{δ 1}}} \times ln \left[\frac{{10}^{5} \times 2 \times \left({H}_{2}-{H}_{1}+{H}_{4}-{H}_{3}+δ\right)}{δ}\right]$ ${R}_{δ 1} = \frac{8}{{F}_{1}} \times δ \times \left(\frac{1}{{u}_{0} \times {S}_{δ 1}}\right) \times 1000$
in response to that b₂=b₄, then: ${S}_{δ 2} = \frac{θ}{2} \left[{\left(\frac{{D}_{4}}{2}\right)}^{2}-{\left(\frac{{D}_{4} - 2 {b}_{4}}{2}\right)}^{2}\right]$ ${F}_{2} = 1 + \frac{δ}{\sqrt{{10}^{- 3} \times {S}_{δ 2}}} \times ln \left[\frac{{10}^{5} \times 2 \times \left({H}_{2}-{H}_{1}+{H}_{4}-{H}_{3}+δ\right)}{δ}\right]$ ${R}_{δ 2} = \frac{8}{{F}_{2}} \times δ \times \left(\frac{1}{{u}_{0} \times {S}_{δ 2}}\right) \times 1000$
in response to that b₁>b₃, then w₁=b₁, w₂=b₃, and D=D₃; in response to that b₃>b₁, then w₁=b₃, w₂=b₁, and D=D₁; and thus: ${F}_{3} = 1 + \frac{δ}{\sqrt{{10}^{- 3} \times \frac{θ}{2} \left({\left(\frac{D}{2}+{w}_{2}\right)}^{2}-{\left(\frac{D}{2}\right)}^{2}\right)}} \times ln \left[\frac{{10}^{5} \times 2 \times \left({H}_{2}-{H}_{1}+{H}_{4}-{H}_{3}+δ\right)}{δ}\right]$ ${R}_{δ 1} = \frac{8}{{F}_{3}} \times \frac{1}{{u}_{0} \times \frac{θ}{2}} \times \frac{1}{2 \times \frac{\left(\frac{{w}_{1} - {w}_{2}}{2}\right)}{δ} \times \left(\frac{D + {w}_{2}}{1000}\right)} \times ln \left[\frac{{\left(\frac{D}{2}+{w}_{2}\right)}^{2} - {\left(\frac{D}{2}\right)}^{2} + 2 \times \frac{\left(\frac{{w}_{1} - {w}_{2}}{2}\right)}{δ} \times \left(D+{w}_{2}\right) \times δ}{{\left(\frac{D}{2}+{w}_{2}\right)}^{2} - {\left(\frac{D}{2}\right)}^{2}}\right]$
in response to that b₂>b₄, then w₁=b₂, w₂=b₄, and D=D₄; in response to that b₄>b₂, then w₁=b₄, w₂=b₂, and D=D₂; and thus: ${F}_{4} = 1 + \frac{δ}{\sqrt{{10}^{- 3} \times \frac{θ}{2} \times \left[{\left(\frac{D}{2}\right)}^{2}-{\left(\frac{D}{2}-{w}_{2}\right)}^{2}\right]}} \times ln \left[\frac{{10}^{5} \times 2 \times \left({H}_{2}-{H}_{1}+{H}_{4}-{H}_{3}+δ\right)}{δ}\right]$ ${R}_{δ 2} = \frac{8}{{F}_{4}} \times \frac{1}{{u}_{0} \times \frac{θ}{2}} \times \frac{1}{2 \times \frac{\left(\frac{{w}_{1} - {w}_{2}}{2}\right)}{δ} \times \left(\frac{D - {w}_{2}}{1000}\right)} \times ln \left[\frac{{\left(\frac{D}{2}\right)}^{2} - {\left(\frac{D}{2}-{w}_{2}\right)}^{2} + 2 \times \frac{\left(\frac{{w}_{1} - {w}_{2}}{2}\right)}{δ} \times \left(D-{w}_{2}\right) \times δ}{{\left(\frac{D}{2}\right)}^{2} - {\left(\frac{D}{2}-{w}_{2}\right)}^{2}}\right]$ ${R}_{δ} = {K}_{2} \times \left({R}_{δ 1}+{R}_{δ 2}\right)$
wherein, K₂ is a reluctance correction coefficient, 0.2≤K₂≤3.

7. The axial-opposed-ring ultrasonic machining device according to any one of claims 1 to 6, further comprising a transmitting mount and a receiving mount, wherein the transmitting mount and the receiving mount are arranged opposite each other along the axial direction of the tool body; an end surface of the transmitting mount facing the receiving mount is provided with a first accommodating groove, and an end surface of the receiving mount facing the transmitting mount is provided with a second accommodating groove; the transmitting unit is accommodated in the first accommodating groove, and the receiving unit is accommodated in the second accommodating groove; an outer peripheral surface of the tool body is provided with a limiting collar protruding along a radial direction of the tool body; and the receiving mount is fixedly sleeved on an outer periphery of the tool body and abuts against a rear end surface of the limiting collar.

8. The axial-opposed-ring ultrasonic machining device according to any one of claims 1 to 6, wherein the air-gap width is δ mm, 0.1≤δ≤3.

9. The axial-opposed-ring ultrasonic machining device according to any one of claims 1 to 6, further comprising a horn, wherein the ultrasonic transducer comprises a piezoelectric vibrator, a screw rod, and a rear cover; the screw rod is disposed in the mounting cavity, and extends along the axial direction of the tool body; a rear end of the horn is fixedly connected to the screw rod; the piezoelectric vibrator is sleeved on the screw rod; a rear end surface of the horn protrudes outward beyond an outer peripheral surface of the screw rod along a radial direction of the screw rod; and the rear cover is threadedly connected to the screw rod, and cooperates with the rear end surface of the horn to limit the piezoelectric vibrator.

10. The axial-opposed-ring ultrasonic machining device according to claim 9, further comprising a collet configured to be sleeved on an outer periphery of a machining tool, and a nut, wherein a front end of the horn is provided with an insertion bore extending rearward; an inner peripheral surface of the insertion bore is tapered with a diameter gradually decreasing from front to rear; the collet is insertable together with the machining tool into the insertion bore; and the nut is configured to be threadedly connectable to the horn, and abuts against the collet to secure the machining tool.

11. The axial-opposed-ring ultrasonic machining device according to claim 10, wherein the collet comprises a conical section cooperating with the insertion bore; the collet is provided with a plurality of first deformation grooves arranged at intervals along a circumferential direction of the collet; and the plurality of first deformation grooves extend to or through the conical section; and
the plurality of first deformation grooves penetrate through an outer side surface and an inner side surface of the collet; the plurality of first deformation grooves extend rearward from a front end surface of the collet along an axial direction of the collet, pass through the conical section, and extend toward a rear end surface of the collet; and a first gap is provided between a rear groove surface of each of the plurality of first deformation grooves and the rear end surface of the collet.

12. The axial-opposed-ring ultrasonic machining device according to claim 11, wherein the collet is provided with a plurality of second deformation grooves arranged at intervals along the circumferential direction of the collet; the plurality of second deformation grooves extend to or through the conical section; and the plurality of second deformation grooves are spaced from and staggered with the plurality of first deformation grooves; and
a second gap is provided between a front groove surface of each of the plurality of second deformation grooves and the front end surface of the collet; and the plurality of second deformation grooves extend through the rear end surface of the collet.

13. The axial-opposed-ring ultrasonic machining device according to any one of claims 1 to 6, wherein the transmitting magnet is made of any one material selected from a group consisting of ferrite, neodymium iron boron, high-frequency ceramic material, powder metallurgy material, amorphous and nanocrystalline alloys, and cobalt iron; and the receiving magnet is made of any one material selected from a group consisting of ferrite, neodymium iron boron, high-frequency ceramic material, powder metallurgy material, amorphous and nanocrystalline alloys, and cobalt iron.

14. An ultrasonic spindle, comprising a first rotary output unit and the axial-opposed-ring ultrasonic machining device according to any one of claims 1 to 13, wherein the rear end of the tool body is assembled to the first rotary output unit.

15. An ultrasonic machine tool, comprising a machine tool body and the ultrasonic spindle according to claim 14, wherein the ultrasonic spindle is mounted on the machine tool body.

16. An ultrasonic drill, comprising a housing, a second rotary output unit, a bearing, and the axial-opposed-ring ultrasonic machining device according to any one of claims 1 to 6, wherein a front end surface of the housing is provided with an accommodating cavity extending rearward; the rear end of the tool body is accommodated in the accommodating cavity and connected to an output end of the second rotary output unit; and the tool body is connected to the housing via the bearing; the transmitting unit is disposed in the accommodating cavity and connected to the housing; and the receiving unit is disposed in the accommodating cavity and connected to the tool body.
